(19) Europäisches Patentamt
European Patent Office
Office européen des brevets

(11) Publication number: **0 148 633**
**B1**

(12) # EUROPEAN PATENT SPECIFICATION

(45) Date of publication of patent specification: **31.05.89**

(51) Int. Cl.$^4$: **C 08 G 65/38,** C 08 G 65/40

(21) Application number: **84309049.9**

(22) Date of filing: **21.12.84**

(54) **Process for the preparation of polyaryletherketones.**

(30) Priority: **22.12.83 US 564394**

(43) Date of publication of application:
**17.07.85 Bulletin 85/29**

(45) Publication of the grant of the patent:
**31.05.89 Bulletin 89/22**

(84) Designated Contracting States:
**AT BE CH DE FR GB IT LI LU NL SE**

(56) References cited:
**EP-A-0 105 487**

**JOURNAL OF POLYMER SCIENCE, vol. 10, no. 12, December 1972, pages 3509-3518, John Wiley & Sons Inc., US; T. TAKEKOSHI: "Polyorthocarbonates"**

(73) Proprietor: **AMOCO CORPORATION**
**200 East Randolph Drive P.O. Box 5910-A**
**Chicago Illinois 60680 (US)**

(72) Inventor: **Kelsey, Donald Ross**
**490 Autern Road - 4B**
**Hillsborough 08876 New Jersey (US)**

(74) Representative: **Cross, Rupert Edward Blount et al**
**BOULT, WADE & TENNANT 27 Furnival Street**
**London EC4A 1PQ (GB)**

**EP 0 148 633 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

Crystalline polyketones, particularly polyaryletherketones as described in, for example, US—A—3,953,400; 3,441,538 and 4,010,147 are known to exhibit a superior combination of properties, such as high use temperatures, thermal and photochemical stability, and resistance to attack by solvents. These properties are due primarily to the high melting points, generally about 250°C and higher, and to the crystalline nature of these polymers.

However, even though crystallinity is desirable to achieve the superior properties of the polyketones, crystallinity interferes with their preparation. At temperatures at which it would be desirable to prepare the polymers, i.e., below 250°C, many crystalline polymers are insoluble or only slightly soluble in typical organic solvents. Thus, under reaction conditions generally suitable for the preparation of amorphous or low melting aromatic polymers, the higher melting crystalline polymers are formed as low molecular weight oligomers because the polymer crystallizes from the reaction solution and, thereafter, undergoes little or no additional reaction.

In order to avoid premature crystallization in preparing high molecular weight crystalline polyketones, two procedures have been used, i.e., nucleophilic aromatic displacement at elevated reaction temperatures and Friedel-Crafts polycondensations.

Nucleophilic aromatic displacement polycondensations are illustrated, for example, by the following reactions (1) and (2):

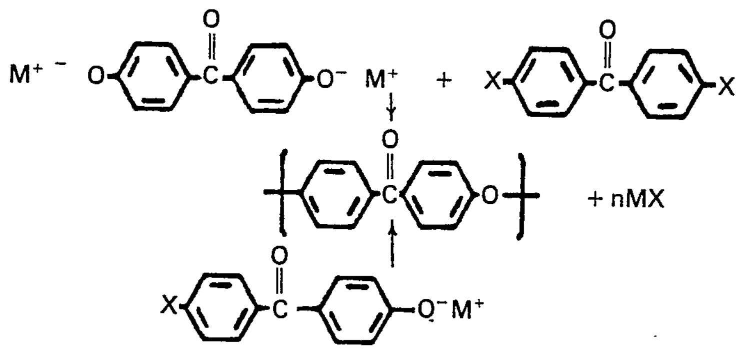

(1)

(2)

where $M^+$ is a counterion and X is a displaceable group. The *Journal of Polymer Sci.,* A—1, *5,* 2375 (1967) has shown that polycondensations of this general type are usually very effective for preparing high molecular weight amorphous poly(arylethers), particularly polysulfones. A two stage polymerization process is described in CA—A—847,963 for achieving high reduced viscosity. Example 3, of this patent obtained a crystalline polysulfone polymer having a RV of 1.96 in sulfolane using potassium carbonate.

US—A—3,928,195 and 4,010,147 and *Polymer, 22,* 1096 (1981) describe the manufacture of higher RV polyaryletherketones by using elevated reaction temperatures and high boiling solvents by the process as described in the aforesaid Canadian Patent. The reaction was carried out using di(alkali metal) salts of bisphenols and aryl sulfone solvents and produced polymers with RVs of 1.2 to 2.6 (1 percent in concentrated sulfuric acid at 25°C). These references stated that high reaction temperatures (250° to 400°C) are characteristic of this process and, furthermore, that the aryl sulfone solvent is selected such that the di(alkali metal) bisphenol salt is only slightly soluble at the reaction temperature so as to prevent undesirable side reactions. The examples of these U.S. Patents described reaction temperatures of 290°C, or higher, to obtain high molecular weight polymers in the aryl sulfone solvents.

As can be seen from these references, high molecular weight crystalline polyaryletherketones can be prepared by nucleophilic displacement using high polycondensation reaction temperatures and high boiling inert solvents such as diphenyl sulfone. However, these methods have serious disadvantages, one of which is cost and difficulty of maintaining and heating large reaction volumes to such elevated reaction temperatures, often to >320°C. Deleterious side reactions, such as chain scission, chain branching, cross-linking, color formation, etc., are also expected to be aggravated at such high temperatures. In addition, the materials of construction of the reaction vessels have to withstand enhanced corrosion at such elevated temperatures. Furthermore, the high boiling reaction solvent must be removed from the polymer to obtain optimum properties. These solvents are generally difficult to remove from the polymer, especially by devolatilization.

Friedel-Crafts polycondensations constitute the second general method for the preparation of polyketones, as illustrated in, for example, the following reactions 3 and 4:

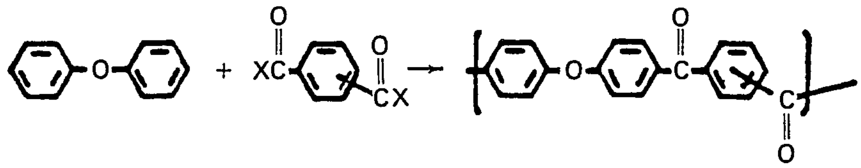

(3)

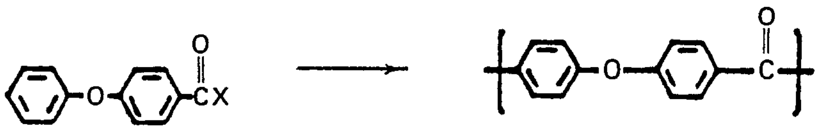

(4)

Such reactions are commonly effected by Lewis acid catalysts, and thus are electrophilic reactions in which a carbonyl-aryl bond is formed in contrast to the nucleophilic reactions discussed above in which a base is employed and an oxygen-aryl bond is formed. As in the case of nucleophilic reactions, Friedel-Crafts reactions for forming crystalline polyaryletherketones have generally resulted in low molecular weights when conducted in the usual organic solvents.

US—A—3,065,205 described the preparation of certain polyketones in organic solvents, albeit with very low molecular weights. For example, the condensation of diphenylether with terephthaloyl chloride (reaction 3) and aluminum trichloride catalyst in nitrobenzene solvent gave a polymer with inherent viscosity of only 0.13 (0.5 percent in concentrated sulfuric acid 30°C); none of the aromatic polyketones described in this art exhibited viscosities greater than 0.18.

In contrast to the generally low molecular weights achieved in organic solvents, US—A—3,441,538 described that very high molecular weight crystalline polyketones could be prepared in anhydrous hydrogen fluoride solvent using boron trifluoride catalyst, by reacting the acid chloride, as in reactions (3) and (4) or the corresponding carboxylic acids as shown in US—A—3,442,857. Thus, crystalline polyketone (m.p. 361°C) was obtained in reaction (4) with inherent viscosity as high as 2.76 (concentrated sulfuric acid, 30°C); reaction (3) with terephthaloyl chloride gave polyether ketone with inherent viscosity of 0.85.

Later, US—A—3,953,400 described a modified boron trifluoride/hydrogen fluoride process employing end-capping reagents to control the inherent viscosity at between 0.8 and 1.65 (0.1 percent in concentrated sulfuric acid, 25°C) to produce melt processable polyketone polymers; it was stated that at viscosities below 0.8, the physical properties of the polymer suffered due to low elongation. US—A—3,953,400 stated that hydrogen fluoride is employed in every case as solvent for the formed polymer.

Thus, it can be seen that high molecular weight crystalline polyketones can be prepared using hydrogen fluoride solvent. However, this process also has serious disadvantages. Hydrogen fluoride is an extremely corrosive and toxic low-boiling substance which attacks most materials and, therefore, is very difficult to handle safely. Moreover, expensive acid-resistant reactors are required such as platinum-lined reaction vessels, or plastic-lined vessels. Additionally, it is common to charge the reaction vessel while cooling to very low temperatures (e.g., −70°C) and only after the materials are charged, to allow the reaction temperature to rise; thus, expensive refrigeration equipment may be required. Also, due to its toxic nature, recovery of hydrogen fluoride is necessary, which requires additional expensive corrosion-resistant equipment. In summary, hydrogen fluoride is an extremely unfavorable reaction solvent in terms of hazards, materials of construction required for its use, and process costs.

It can be readily appreciated that although hydrogen fluoride is a solvent for high molecular weight crystalline polyaryletherketones, it cannot be used to prepare polymers by the nucleophilic displacement polycondensation reactions discussed above since these reactions occur under basic conditions. For these reasons, the use of other strong acid solvents, such as concentrated sulfuric acid, which are known to dissolve crystalline polyaryletherketones likewise cannot be used.

US—A—3,734,888 states that polyketones consisting primarily or exclusively of diphenyl ether and terephthaloyl chloride have melting points in excess of 400°C. At the temperature required for extruding the polymer into a shaped article the polymer is subject to thermal degradation, and special construction materials are needed for the extrusion die and other parts of the extruder so as to prevent warping, corrosion and oxidation. The patent then states that this problem of forming the polyketone into articles is resolved by converting the polyketone to a polyketal, extruding the polyketal into the desired article and then converting the article to a polyketone. Specifically, the process comprises contacting an aromatic polyketone and a 1,2- or 1,3- glycol in the presence of an acid catalyst until at least 20% of the carbonyl groups are converted to the corresponding ketal groups; isolating the resulting polyketal; extruding the polyketal into a shaped article at an elevated temperature and bringing the shaped article into contact with water and acid catalyst to hydrolyze it to the corresponding polyketone.

However, US—A—3,734,888 does not solve the problem of preparing high molecular weight crystalline polyarylketones.

A process has now been discovered by which novel high molecular weight crystalline polyaryletherketones are prepared under conditions significantly milder and safer than those previously employed. In particular, in the process of this invention, crystalline polyaryletherketones are prepared at temperatures

below those employed in the prior art as described in, for example, US—A—3,928,295 and 4,010,147, and simultaneously the instant process does not require corrosive hydrochloric acid as described in, for example, US—A—3,953,400, and therefore avoids the disadvantages of these methods discussed above.

In the instant invention a facile process has been discovered whereby high molecular weight crystalline polyaryletherketones are prepared by first forming a high molecular weight amorphous polymer, i.e., a polyketalketone. The reaction is carried out under mild conditions using the typical solvents used to prepare amorphous polyarylethers. The polyketalketone is then converted to crystalline polyaryletherketone.

In general, the process of this invention involves at least two distinct reactions or steps in which (a) monomer units —A'— are reacted to produce a precursor high polymer ‑[A']‑ under reaction conditions (i) and then (b), the precursor polymer is further reacted under conditions

$$-A'- \xrightarrow{i} -[A']- \xrightarrow{j} -[A'']-$$

(j) to produce the desired crystalline polymer ‑[A'']‑. More than one type of monomer unit can be employed, as for example

$$-B'- + -D- \xrightarrow{i} -[B'-D]- \xrightarrow{j} -[B''-D]-$$

The process is generally characterized by formation of the precursor polymers with high molecular weights and which are soluble in the organic solvent used in reaction (i), whereas the crystalline polymers formed after reaction (j) are not soluble under conditions (i) employed in the first step. Conversely, the reaction conditions (i) are such that, generally, if these conditions were employed as a single reaction step using monomer units —A''— or —B''— (instead of —A'— or —B'—), the crystalline polymer is insoluble under the reaction conditions and formed in lower molecular weight than obtained using the two-step process. Furthermore, reaction (j) is such that essentially complete conversion of units —[A']— (or —[B']—) to —[A'']— (or —[B'']—) is obtained with little or no polymer chain cleavage or chain cross-linking.

According to this invention there is provided a process for the preparation of a polyaryletherketone which comprises:

(a) preparing a polyketal by reacting one or more compounds of the formula:

HO—K'—OH or HO—L'—X

and optionally one or more bisphenols HO—W—OH wherein K' is the residue of a substituted or unsubstituted aromatic or heteroaromatic nucleus containing from 10 to 40 carbon atoms and also containing at least one backbone difunctional unit of the following formula:

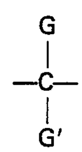

said unit being stable to the basic polymerization conditions employed, wherein G and G' are selected from the group consisting of halide, —OR, —OCOR$^1$, —NR$^2$R$^3$, —NHCOR$^4$, —SR$^5$, wherein

R and R$^1$—R$^5$ are each independently alkyl, aryl, or arylalkyl of from 1 to 20 carbon atoms;

R and R$^1$—R$^5$ may be substituted or unsubstituted, may contain heteroatoms, and may also be connected by a chemical bond thus connecting G and G', and wherein G and G' are combined and selected from the group consisting of =N—N—Ar, =NOH, =N—Ar and =N—NHCONR$^6$R$^7$, wherein Ar and Ar' are substituted or unsubstituted aryl of from 5 to 12 carbon atoms and R$^6$ and R$^7$ are hydrogen or as defined for R$^{1-5}$ above, with the proviso that the R's should not contain functionality which is base sensitive;

L' is the residue of a substituted aromatic or heteroaromatic nucleus of from 10 to 40 carbon atoms containing at least one electron-withdrawing group situated ortho or para to X and also containing at least one difunctional backbone unit —C(G) (G')— as defined above wherein X is a group displaced during the polymerization reaction of HOK'OH;

W is the residue of a substituted or unsubstituted aromatic or heteroaromatic nucleus of from 5 to 30 carbon atoms;

with coreactant which is one or more monomers X—Z—Y or HO—L'—X with itself or HOK'OH with HO—L'—X and ZXY, where Z is the residue of a substituted or unsubstituted aromatic or heteroaromatic nucleus of from 5 to 30 carbon atoms containing at least one electron-withdrawing group ortho or para to X and Y, wherein X and Y are leaving groups, which are displaced during the polymerization reaction; and

wherein the polyketal has a molefraction of $-[O-K'-O]-$ units or $-[O-L'-O]-$ units greater than or equal to 0.1, said reaction being carried out in a dipolar aprotic solvent in the presence of a base, and

(b) converting the polyketal to a polyarylетherketone in the presence of water and an acid under heterogeneous or homogeneous conditions wherein the heterogeneous hydrolysis occurs at a temperature above the glass transition temperature of the polyketal.

Preferably the polyketal is derived from the following:

(a) one or more monomers —X—Z—Y where Z is

$$-Ar^3-Q-[Ar^4-Q']_n-Ar^5- \text{ or } -\overset{Q''}{\overset{|}{Ar^6}}-$$

where $Ar^{3-6}$ are substituted or unsubstituted aryl radicals of from about 5 to about 18 carbon atoms, n is 0 to about 3, Q and Q' are electron withdrawing groups ortho or para to X and Y, and selected from the group consisting of $-SO_2-$, —CO—, —SO—, —N=N—, —C=N—, —C=N(O)—, imide, vinylene (—C=C—) and substituted vinylene such as $-CF_2=CF_2-$ or —C=C(CN)—, perfluoroalkyl such as $-CF_2-CF_2-$, $-P(O)R^8-$, wherein $R^8$ is a hydrocarbon group, ethenyl ($C=CH_2$), $C=CF_2$, $C=CCl_2$, and Q'' is an electron withdrawing group ortho or para to X and Y and selected from the group consisting of $-NO_2-$, —CN, perfluoroalkyl such as $-CF_3$, —NO, $-SO_mR^8$ (m is 1 or 2), or hetero aromatic nitrogen as in pyridine and the like; and wherein the displaceable leaving groups X and Y are halogen such as —F and —Cl, $-NO_2$, $-OSOR^8$, $-OSO_2R^8$;

(b) optionally one or more bisphenols HO—W—OH, where W is selected from the following:

$$-Ar^3-Q-[Ar^4-Q']_n-Ar^5-Ar^7- \text{ and } -Ar^8-V-Ar^9-,$$

where n, $Ar^{3-5}$, Q, and Q' are as defined above, $Ar^{7-9}$ are as defined for $Ar^{3-5}$, and wherein V is a single bond, —O—, —S—, —S—S— or a difunctional hydrocarbon radical of from 1 to 20 carbon atoms, such as alkyl, aryl, and alkylaryl radicals and rings fused to both $Ar^8$ and $Ar^9$;

(c) one or more bisphenol monomers HO—K'—OH where K' is selected from

$$-Ar^{10}-\underset{G'}{\overset{G}{C}}-Ar^{11}-, \text{ and } -Ar^3-Q^3-[Ar^4-Q^4]_p-Ar^5-$$

where G, G', and $Ar^{3-5}$ are as defined above, p is an integer of 1 to 5, $Q^3$ and $Q^4$ are as defined for Q, Q', and V, with the proviso that at least one $Q^3$ and $Q^4$ is the group —C(G)(G')—, and $Ar^{10}$ and $Ar^{11}$ are substituted or unsubstituted aryl of from about 5 to about 18 carbon atoms such as phenylene, biphenylene, and $-Ar^8-V-Ar^9-$ as defined above.

Most preferably, the polyketal is derived from the following:

(a) one or more monomers X—Z—Y, where Z is selected from the following:

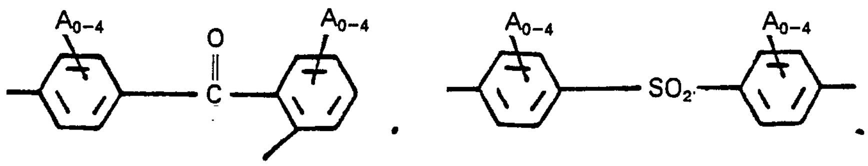

,

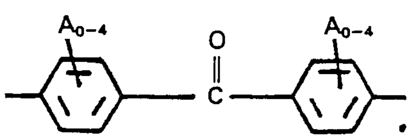

,

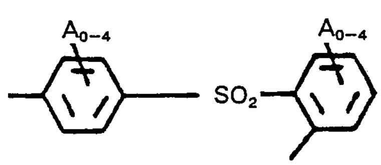

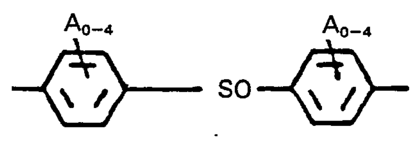

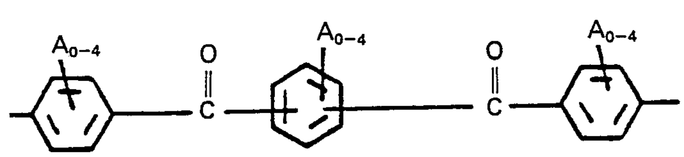

,

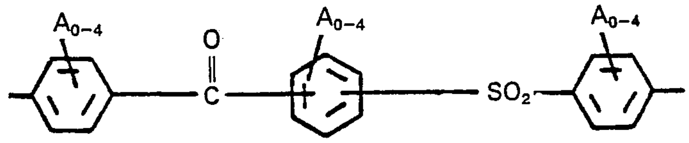,

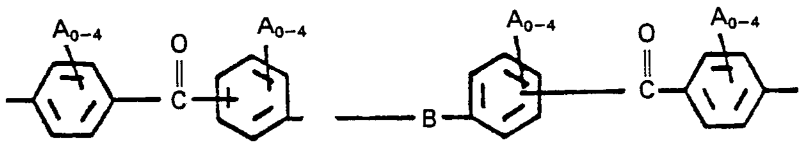,

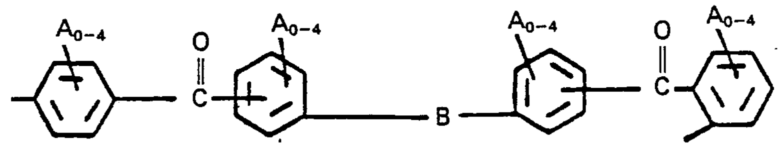,

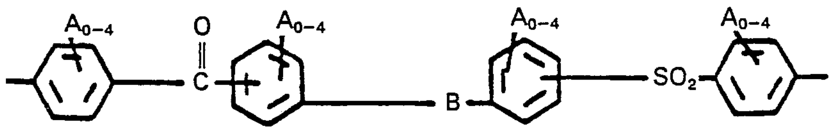,

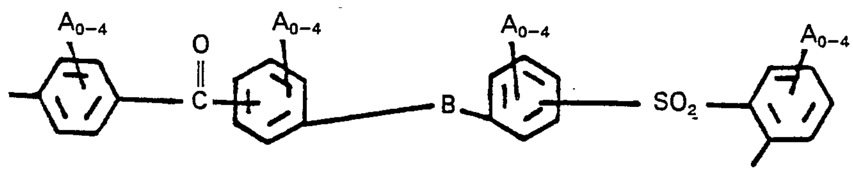,

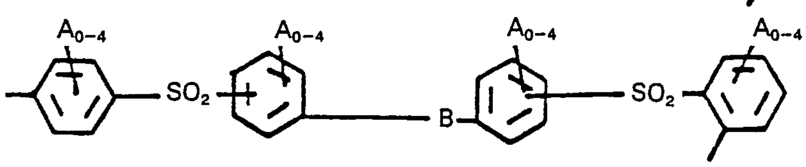,

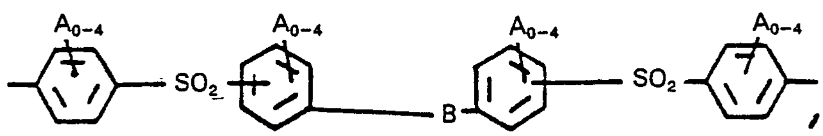,

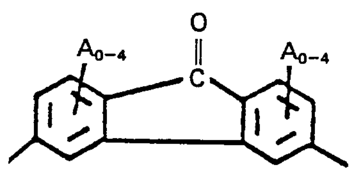

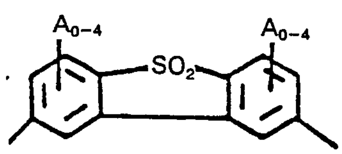

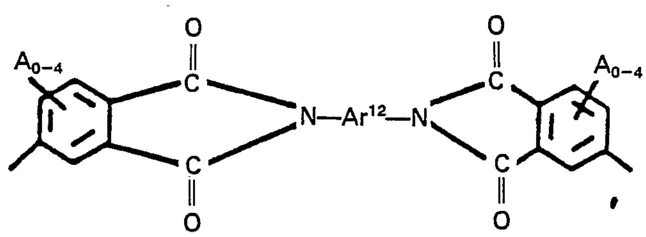,

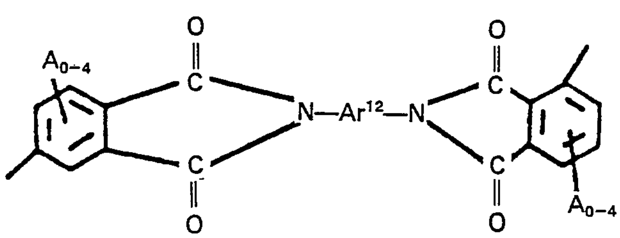

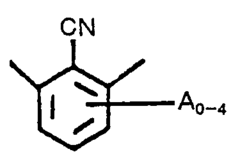

and isomers thereof, and wherein B is defined as above for V, Q, and Q', $Ar^{12}$ is defined as above for $Ar^{1-11}$, and A is a non-interfering substituent group unreactive under the polymerization conditions and independently selected from the group of common organic substituents such as hydrogen, alkyl, aryl, halogen, cyano, and wherein X and Y are halogen or nitro; and most preferably Z is

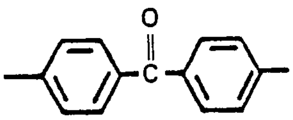 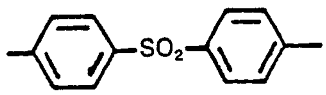, and 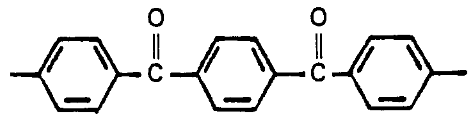

wherein X and Y are F or Cl and A is hydrogen;

(b) optionally one or more comonomer bisphenols HO—W—OH, where W is selected from the following:

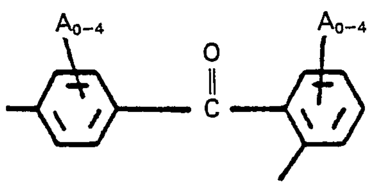 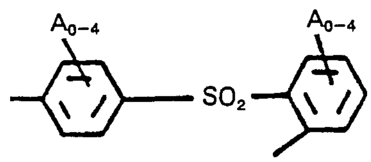 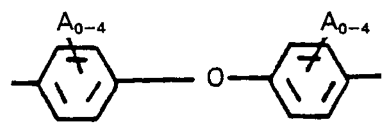

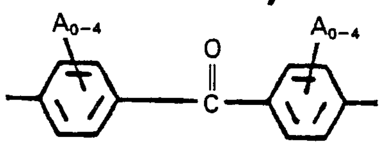 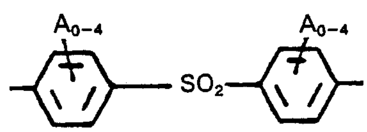 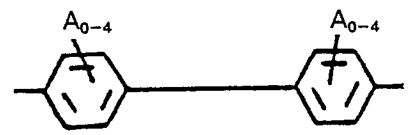

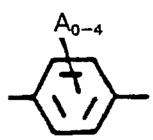, 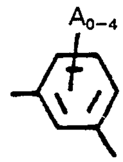 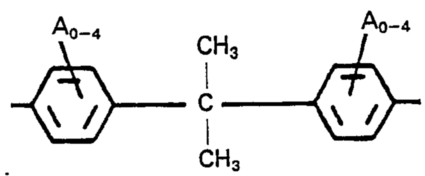

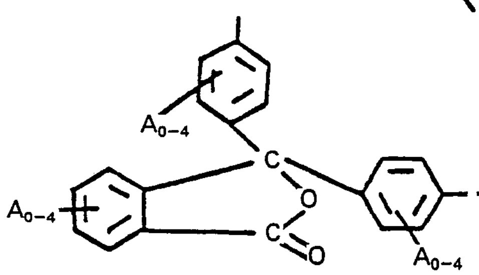 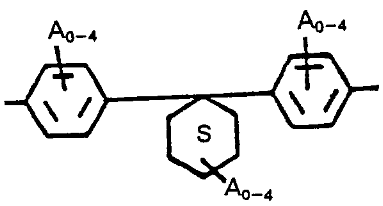 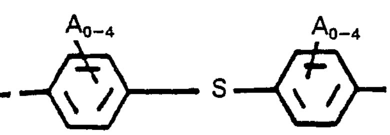

and isomers thereof, and wherein A is defined as above and particularly most preferably where W is selected from the following:

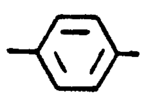, 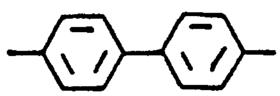, 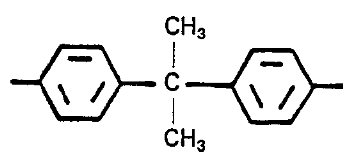

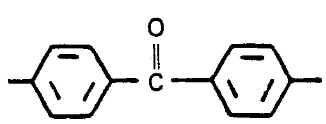 or 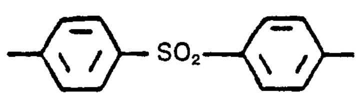

wherein A is hydrogen and

(c) one or more bisphenols HO—K'—OH where K' is selected from

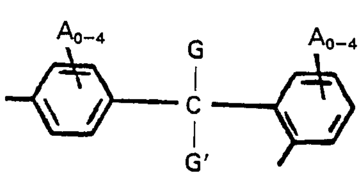 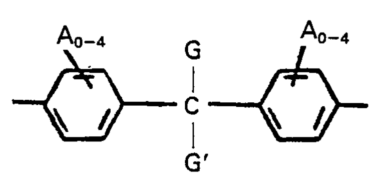

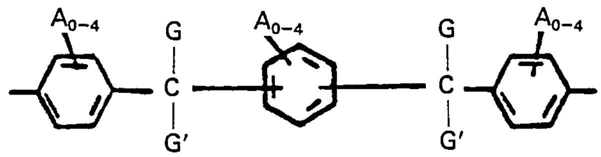

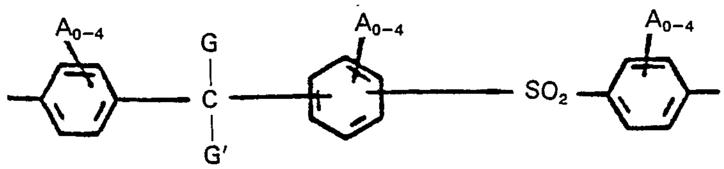

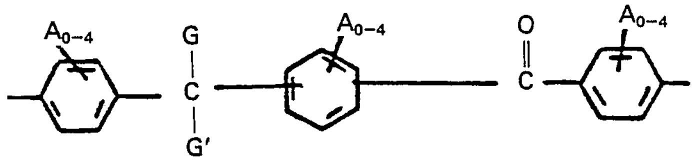

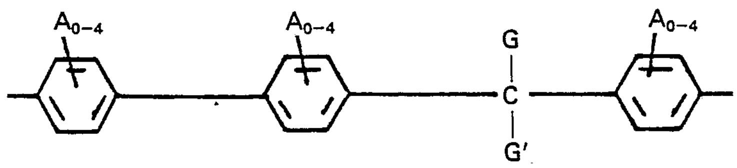

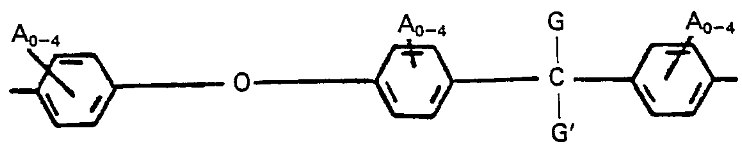

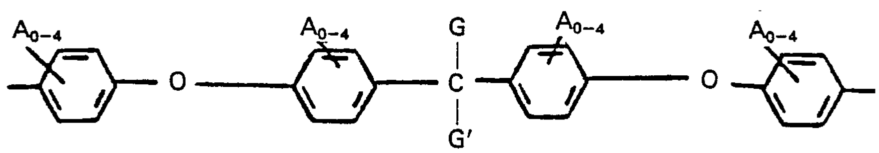

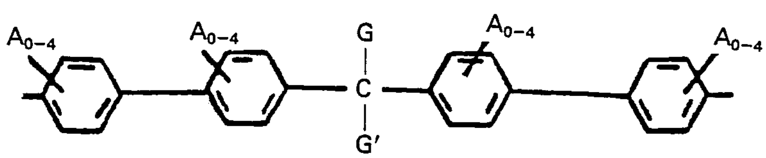

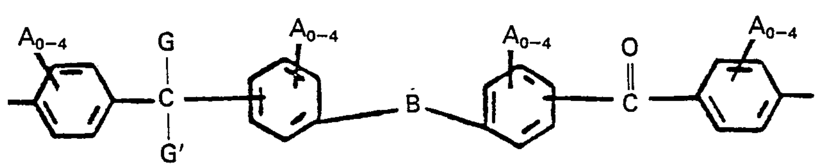

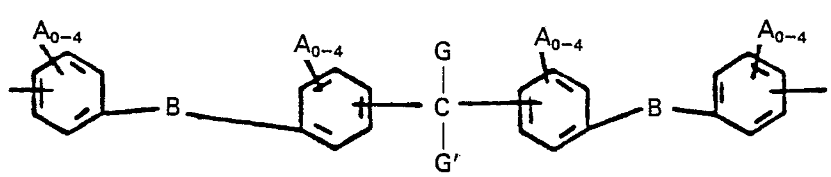

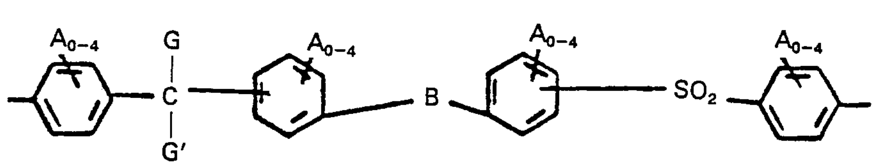

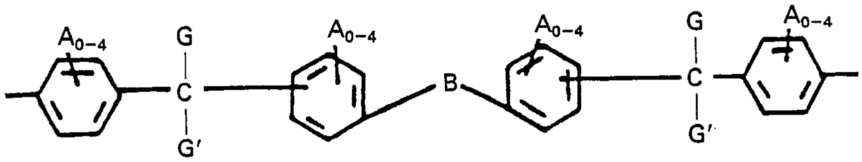

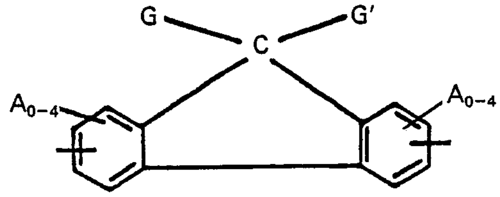

and isomers thereof, and wherein A and B are as defined above, and most preferably the following:

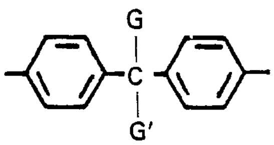 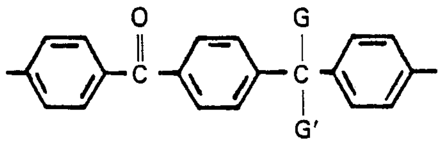 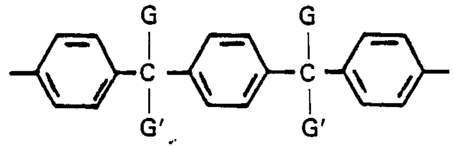

wherein A is hydrogen and G and G′ are —OR, —SR, or —$NR_2$ wherein R is a substituted or unsubstituted alkyl, aryl, or aryl-alkyl of from 1 to about 20 carbon atoms and may contain heteroatoms or other non-interfering functional groups with the proviso that R should not contain functionality which is base sensitive such as hydroxyl, and G and G′ may be the same or different and connected or unconnected; and most preferably G and G′ are —OR.

Examples of R include methyl, ethyl, propyl, isopropyl, benzyl, cyclohexyl, and where G and G′ are connected —$CH_2CH_2$—, —$CH(CH_3)CH_2$—, —$CH(CH_3)CH(CH_3)$—, —$C(CH_3)_2CH_2$—, —$C(CH_3)_2CH(CH_3)$—, —$C(CH_3)_2C(CH_3)_2$—, —$CH_2CH_2CH_2$—, —$CH_2C(CH_3)_2CH_2$—,

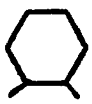 , 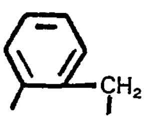 , 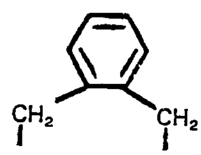

The most preferred ketal bisphenol monomers are characterized as having formula (i) or (ii)

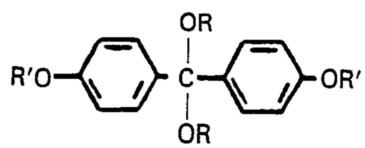
(i)

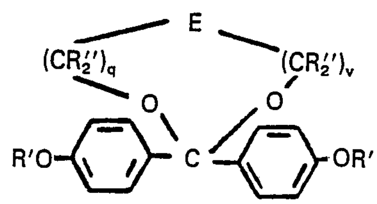
(ii)

where R is as defined above, R′ is hydrogen or —C(O)R‴ wherein R‴ is substituted or unsubstituted aryl or alkyl group containing 1 to about 20 carbon atoms, R″ is independently selected from the group consisting of hydrogen, alkyl, aryl, arylalkyl containing from 1 to about 20 carbon atoms, substituted or unsubstituted, E is selected from the group consisting of a single bond, double bond, difunctional hydrocarbon, carbonyl, —O—, —S—, —SO—, —$SO_2$—, —NR—, and difunctional silicon, q is 1 or 2, and v is 1 or 2.

The most preferred ketal bisphenol monomers are of the following formula:

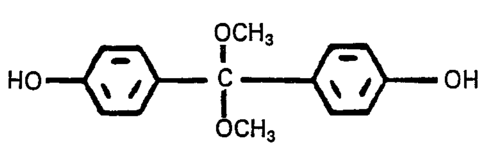 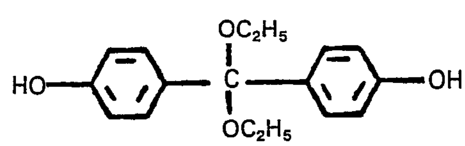

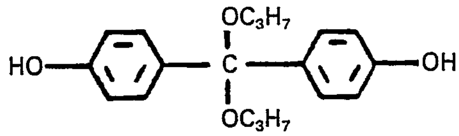
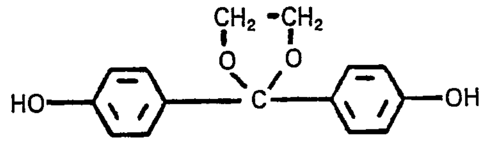
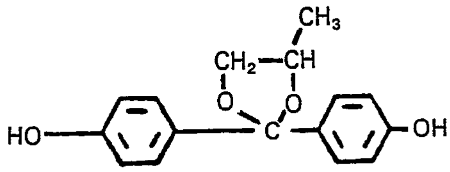
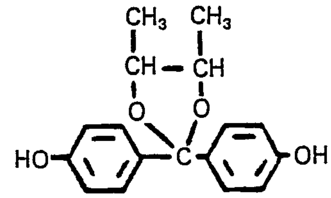
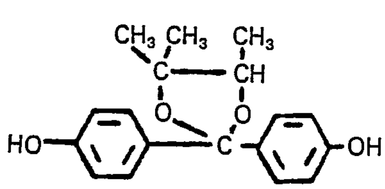
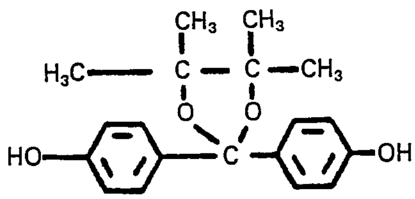
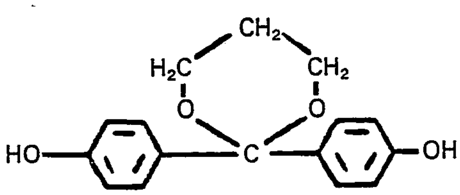
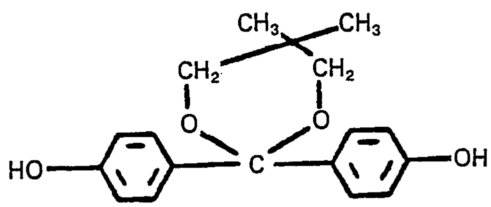

and their corresponding carboxylic acid esters.

Optionally, the polyketal may be derived from one or more of the monomers X—Z—Y, HO—W—OH, and HO—K'—OH or HO—L'—X wherein L' and X are as defined above wherein L' contains the unit —C(G)(G') wherein and G' are defined above and G and G' are also combined and selected from the group consisting of N—N—Ar, =NOH, =N—Ar' and =N—NHCONR$^6$R$^7$, wherein Ar and Ar' are substituted or unsubstituted aryl of from about 5 to about 12 carbon atoms and R$^6$ and R$^7$ are hydrogen or as defined for R$^{1-5}$ above.

Preferred monomers HO—L'—X are those selected from the following

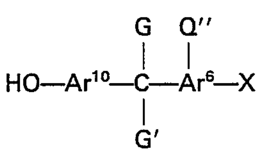 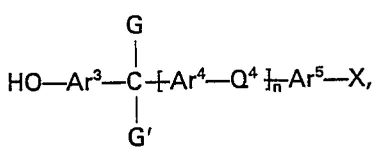, and $HO-Ar^3-[Q^3-Ar^4]_n-Q^4-Ar^5-X$

wherein Ar$^{3-6}$, Ar$^{10}$, Q'', G, and G', are as defined above, Q$^4$ is as defined above with the proviso that at least one Q$^4$ is defined as for Q and Q' and is ortho or para to X, Q$^3$ is as defined above with the proviso that at least one Q$^3$ is —C(G)(G'), and n is 1 to about 5, and wherein X is halogen or nitro.

Most preferably HO—L'—X is selected from the following:

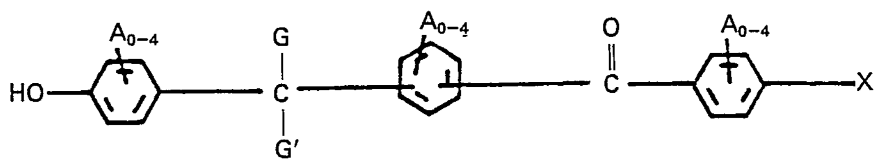

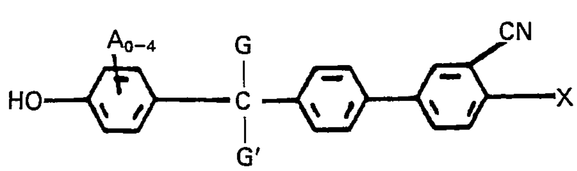

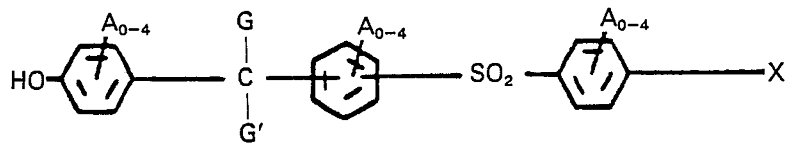

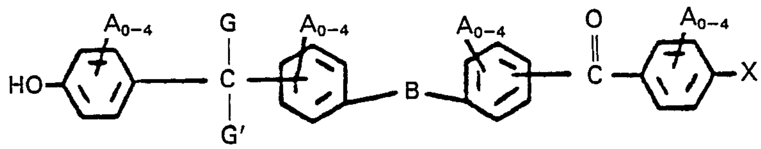

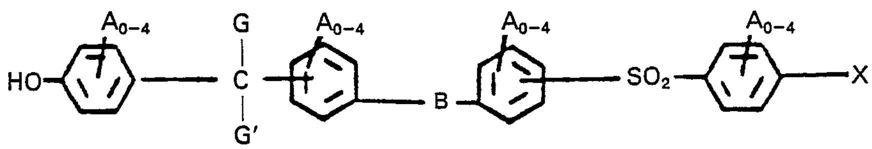

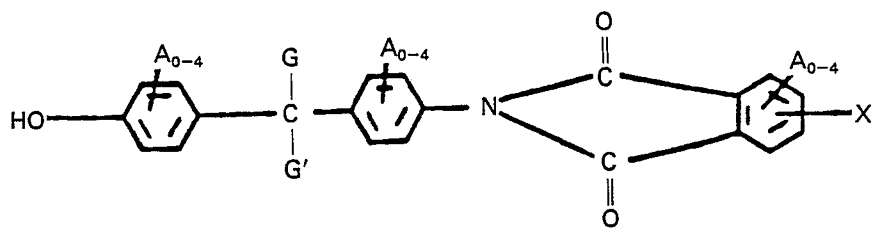

and isomers thereof, and wherein A and B are as defined above and X is F, Cl, or $NO_2$; G and G′ are —OR, —SR, or —$NR_2$ wherein R is a substituted or unsubstituted alkyl, aryl, arylalkyl of from 1 to about 20 carbon atoms and may contain heteroatoms of other non-interfering functional groups with the proviso that R not contain functionality which is base sensitive, such as hydroxyl, and G and G′ may be the same or different and connected or unconnected; and most preferably HO—L′—X is of the following formulae:

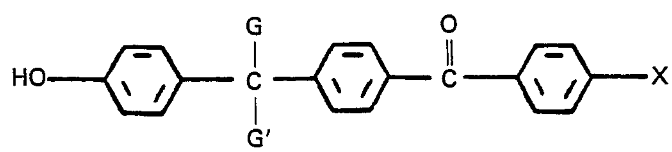

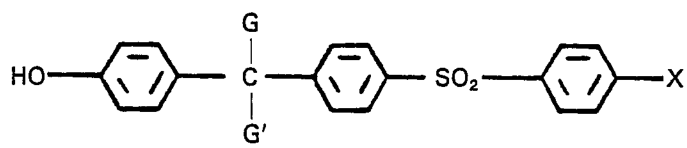

wherein A is hydrogen, X is F or Cl, and G and G′ are OR. Examples of ketal halophenol monomers include those of the following formulae:

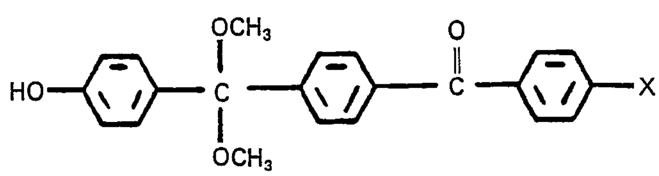

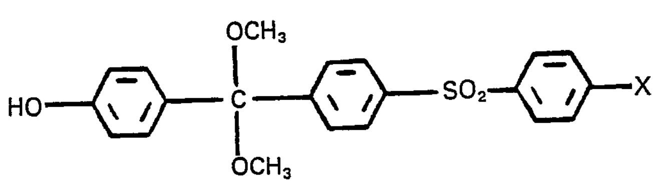

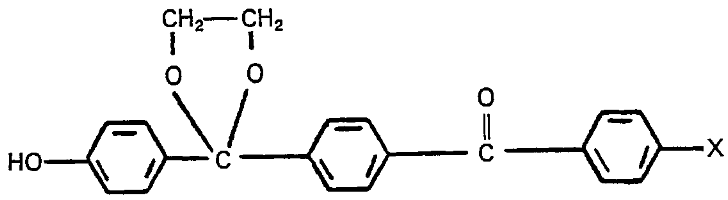

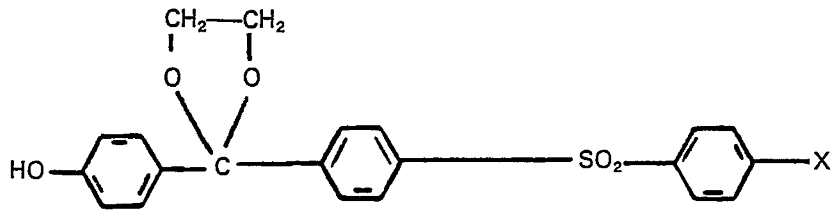

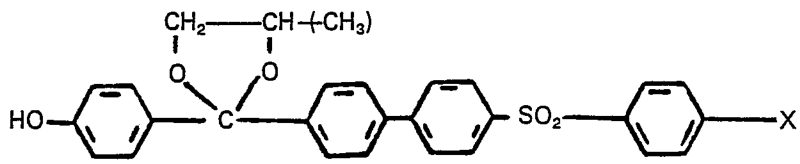

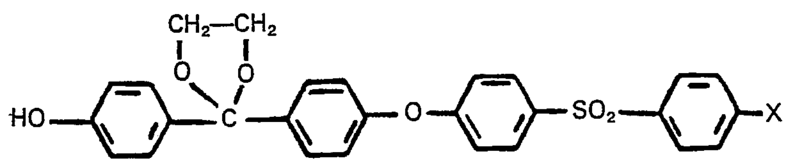

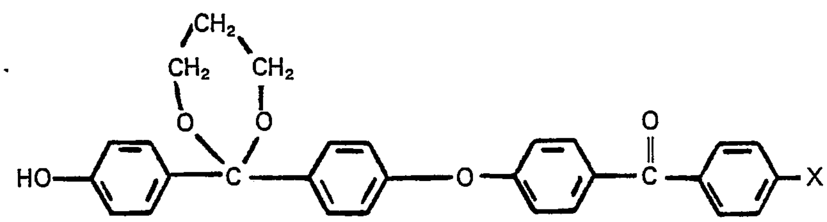

wherein X is F or Cl.

Also, the polyketal may optionally be derived from the halophenol monomer HO—L—X in combination with monomers HO—L′—X or HO—K′—OH, optionally HO—W—OH, and X—Z—Y where L and X are as defined above for L′ except that the group —C(G)(G′)— need not be present. Preferred halophenol monomers are the following:

$$HO—Ar^3—[Q^3—Ar^4]_n—Q^4—Ar^5—X$$

where $Ar^{3-5}$, $Q^3$ and $Q^4$ are as defined for HO—L′—X except that one or more $Q^3$ need not be —C(G)(G′)— and n is 0 to 5.

Most preferred monomers include the following:

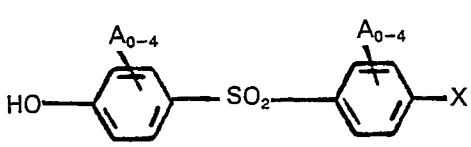

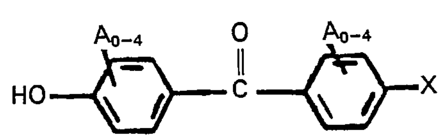

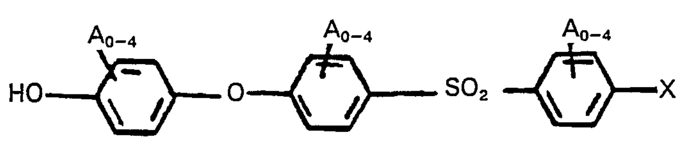

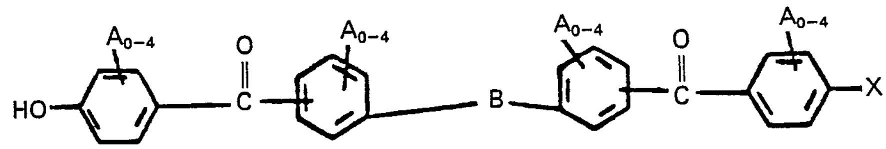

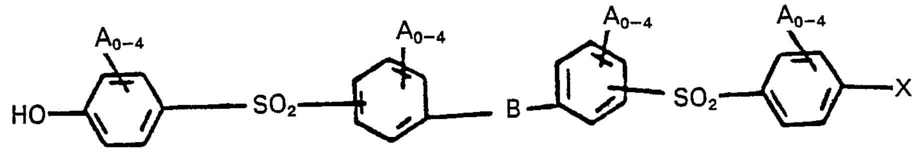

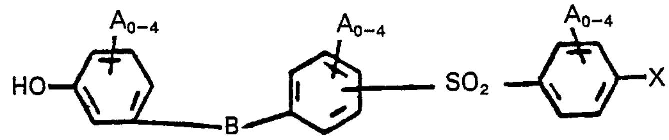

and isomers thereof and wherein A and B are as defined above and X is F, Cl, or nitro; especially preferred are the following:

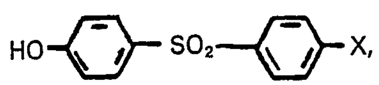 and 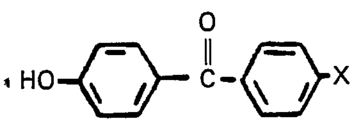

where A is hydrogen, and X is F or Cl.

The polyketals are essentially linear polyethers comprised of the following repeat units:

$$-[O-K'-O]_{k'}-[O-W-O]_{w}-[Z]_{z}-[O-L]_{l}- \quad \text{(iii)}$$

$$-[O-L'-O]_{l'}-[O-W-O]_{w}-[Z]_{z}-[O-K'-O]_{k'}- \quad \text{(iv)}$$

where K', W, Z, L and L' are as defined above in their general, preferred, and most preferred embodiments and wherein k', w, z, l' are the relative mole fractions selected so as to achieve the proper stoichiometric or near stoichiometric ratios for the desired oligomers and polymers. Thus it is obvious to one skilled in the art that the sum of k' and w must closely approximate z whereas the ratio of $^{z}/l'$ or $^{z}/l$ is not critical except that for the polyketals of this invention the mole fraction k' is greater than or equal to 0.1 in (iii) or mole fraction l' is greater than or equal to 0.1 in (iv).

The polyketals are generally amorphous when w and l are small in (iii), e.g., when both k' and z approximately equal 0.5 and both w and l approximately equal zero, or when w is small in (iv). It can be readily appreciated by one skilled in the art, however, that in those instances where k' and l' are zero or nearly zero, i.e., by not employing monomers HO—K'—OH or HO—L'—X, and the resulting polymer is crystalline, then the formation of high molecular weight is often more difficult to achieve due to crystallization of the polymer from the reaction medium. In such cases, it may be advantageous to use a sufficient proportion of HO—K'—OH or HO—L'—X so as to maintain polymer solubility in the reaction medium and, in so doing, reduce or eliminate the crystallinity of the polymer.

The most preferred polyketals are those of the aforementioned most preferred monomers, i.e., polymers containing the following structural repeat units:

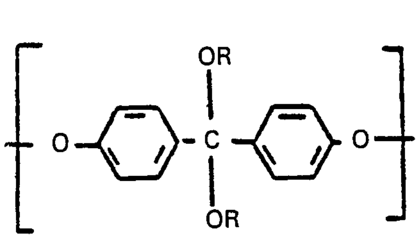

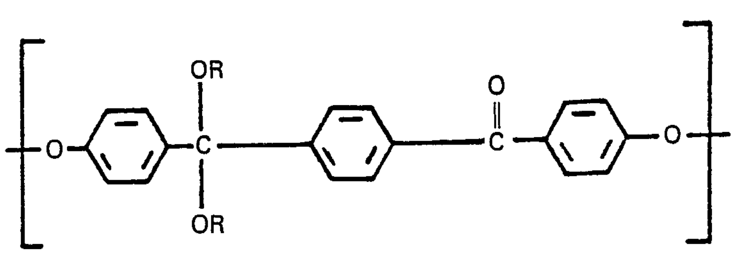

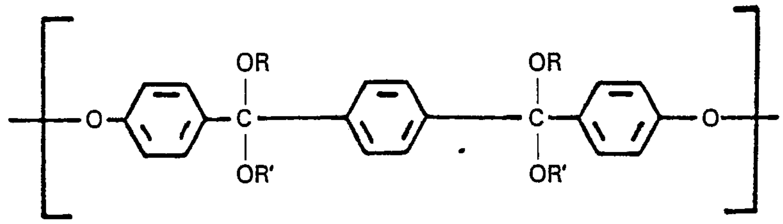

**(V)**

optionally with the following:

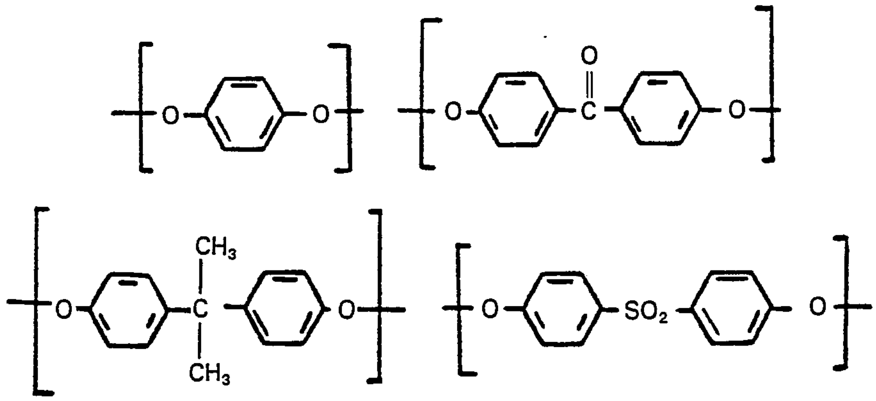

(vi)

together with the appropriate molar equivalent proportion of the following:

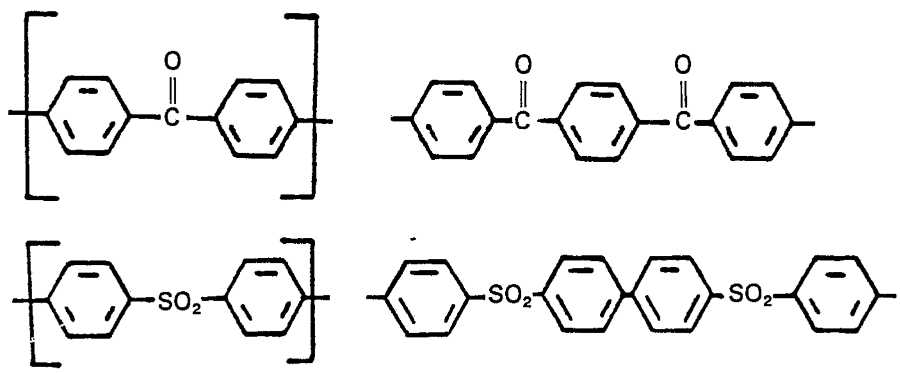

(vii)

where R is as defined above.

The polyaryletherketones prepared according to the process of this invention are essentially linear polymers comprised of the following repeat units:

$$[O—K''—O]_{k'}\ [O—W—O]_w\ [Z]_z\ [O—L]_l$$

$$[O—L'']_{l'}\ [O—W—O]_w\ [Z]_z\ [O—K''—O]_{k'}$$

wherein W, Z, L, W, z, l, k' and l' are as previously defined. K'' and L'' are as defined for K' and L' except that backbone difunctional unit

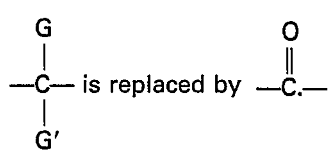
is replaced by

The most preferred polyaryletherketones contain the following structural repeat units:

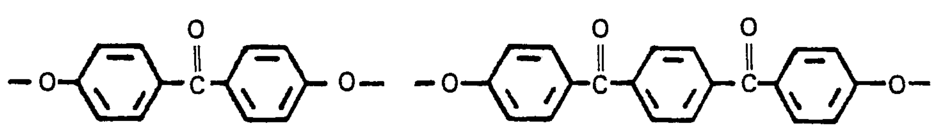

optionally with the following:

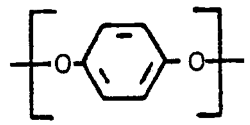 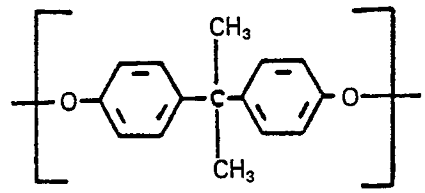 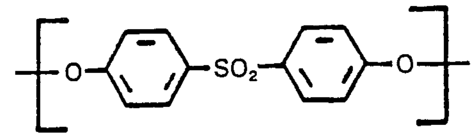

together with the appropriate molar equivalent proportion of the following:

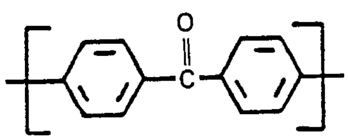 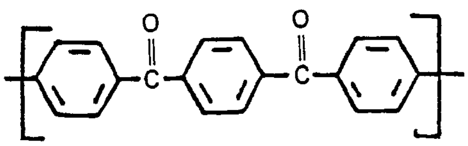

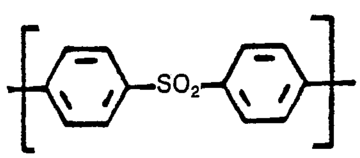 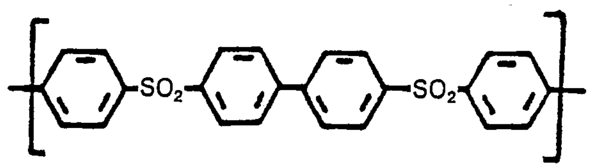

The preferred polyaryletherketones are characterized as possessing a greater degree of crystallinity than analogous polyaryletherketones prepared by either the high temperature process or the boron-trifluoride/hydrogen fluoride process of the prior art. This greater degree of crystallinity is evidenced by higher tensile modulii at temperatures of from about 200°C up to about 350°C, by higher heat of crystallization as measured by differential scanning calorimetry (DSC), and by higher heat of fusion as measured by DSC. Carbon—13 nuclear magnetic resonance spectra obtained on solid polymer samples using cross-polarization and magic angle spinning techniques show relatively narrow resonance bands for polymer prepared according to the process of this invention whereas polymers prepared by the methods of the prior art exhibit broader bands and shoulders which are characteristic of less uniform structures.

The process for the preparation of the ketal monomers from the precursor diaromatic ketones containing at least one hydroxyl group ortho or para to the carbonyl comprises reacting the ketone precursor with a glycol in the presence of an alkylorthoester and a solid catalyst.

The precursor ketones are those analogous to the monomers HO—K′—OH and HO—L′—X described herein except that the group —C(G)(G′) is replaced by a carbonyl and at least one hydroxyl group is situated ortho or para to said carbonyl.

The glycols, which include the heteroatom analogues such as thioglycols and dithiols, are of the general formula:

$$HO—CR_2''—E—CR_2''—OH$$

wherein R″ and E are as defined above, preferably with E being a single bond, and which include ethylene glycol, propylene glycol, 2,3-butanediol, 2-methyl-1,2-propanediol, 2-methyl-2,3-butanediol, 2,3-dimethyl-2,3-butanediol, 1,3-propanediol, 2,2-dimethyl-1,3-propanediol.

The alkylorthoesters include trimethyl orthoformate, triethyl orthoformate, trimethyl orthoacetate, triethyl orthoacetate, tetramethyl orthosilicate, tetraethyl orthosilicate, and the like. Readily hydrolyzed compounds such as 2,2-dimethoxypropane, 2,2-dimethyl-1,3-dioxolane, and the like, which form volatile products such as methanol, ethanol, acetone, may be substituted for the orthoester.

The solid catalyst is preferably a finely divided acidic alumina-silica compound, and most preferably a montmorillonite clay as exemplified by the montmorillonite designated K—10 (obtained from United Catalysts). While the montmorillonite clays are preferred, other solid acidic catalysts with high surface areas may also function effectively as catalysts. These include acidic alumina, sulfonated polymer resins, as described in Synthesis, 282 (*1981*).

The reaction is conducted by mixing together the ketone precursor, about one equivalent, or preferably an excess of the glycol, about one equivalent, or preferably an excess of the orthoester, and at least 1 gram of the solid catalyst per equivalent of ketone, preferably 10 or more grams of solid catalyst per equivalent of ketone. The reaction is optionaly conducted in the presence of an inert solvent. Since the catalyst is easily removed by filtration for reuse, large excesses of the solid may be conveniently employed.

The reaction is conducted at a temperature of from about 25°C to about the boiling point (b.p.) of the orthoester used, but preferably at a temperature below the boiling point of the orthoester but above the boiling point of the orthoester reaction products. For example, a reaction temperature of from about 65°C to 95°C is suitable when using trimethyl orthoformate (b.p. = 102°C), the reaction products of which are methanol (b.p. = 65°C) and methyl formate (b.p. = 34°C). It is apparent that the reaction temperature can be adjusted appropriately when conducting the reaction under reduced or elevated pressures.

The most preferred ketal monomer is preferably prepared by heating a mixture of 4,4′-dihydroxybenzophenone, excess glycol, excess trialkyl orthoformate, and from about 0.1 to about 5 grams of montmorillonite clay per gram of ketone and, preferably, from about 0.5 to about 2.5 grams of clay per gram of ketone, so as to distill off the alcohol derived from the orthoformate. The ketal, 2,2-bis(4-hydroxyphenyl)-1,3-dioxolane, can be obtained in excellent yield (60% to almost quantitative) in less than 48 hours reaction time.

Standard isolation methods can be employed to recover the ketal monomer and unreacted ketone, if any, with due care to avoid acidic aqueous environments. In some cases recrystallization or other extensive purification of the isolated reaction product may be unnecessary prior to use in the process to prepare a polyketal. Thus, for example, after dilution of the reaction with ethyl acetate solvent, filtration to remove the solid catalyst, extraction of the solution with basic water to remove excess glycol, drying with a conventional drying agent such as anhydrous sodium sulfate, removal of the solvent and volatile materials under vacuum, and then washing the resulting solid with a solvent such as methylene chloride to remove minor contaminants, a reaction product is obtained which contains primarily ketal bisphenol monomer but may still contain some unreacted ketone precursor. This reaction product may be used without further purification to prepare high molecular weight polyketal.

In general the reaction conditions employed to prepare the polyketals are those used for effecting polymerization of bisphenols with bishalobenzenoid compounds or of halophenols for the preparation of polyarylethers.

The preparation of the polyketals is conducted in the presence of a base in a dipolar aprotic solvent, and preferably in the presence of an inert azeotropic agent, at temperatures above about 100°C.

The base which may be used is one capable of recting with the aromatic hydroxyls of the bisphenol or halophenol monomers to form the mono or disalts thereof. Alkali metal carbonates, bicarbonates, hydroxides, and mixtures thereof, are commonly used in near stoichiometric amounts or in excess. Although the mono or disalts can often be formed separately and isolated for the polymerization reaction, it is usually preferable to react the hydroxyl monomers with the base in situ either prior to addition of the bishalobenzenoid monomer or during the polymerization step in the presence of the bishalobenzenoid monomer. In the latter case the alkali metal carbonates and mixtures thereof are particularly useful.

The dipolar aprotic solvents commonly used include dialkylamides such as dimethylformamide and dimethylacetamide; cyclicalkylamides such as N-methylpyrrolidinone and N-propylpyrrolidinone, acyclic and cyclic ureas such as N,N'-dimethylpropyleneurea and 1,2-dimethyl-2-imidazolidinone; dialkyl and diaryl sulfoxides such as dimethyl sulfoxide; dialkyl, diaryl, and cyclic sulfones such as dimethyl sulfone, diphenyl sulfone, and sulfolane; sulfamides and phosphoramides, such as N,N,N',N'-tetraethyl sulfamide and hexamethyl phosphoramide. Generally, the lower boiling solvents (b.p. <290°C) are preferred.

The azeotropic agent used to remove the water of reaction or water introduced into the reaction is generally any inert compound which does not substantially interfere with the polymerization, codistills with water, and boils between about 25° and about 250°C. Common azeotropic agents include benzene, toluene, xylene, chlorobenzene, methylene chloride, dichlorobenzene, trichlorobenzene. It is advantageous, of course, to select the azeotropic agent such that its boiling point is less than that of the dipolar solvent used. Although an azeotropic agent is commonly used, it is not always necessary when higher reaction temperatures, for example, above 200°C, are employed especially when the reaction mixture is continuously sparged with inert gas.

It is generally desirable to conduct the reaction in the absence of oxygen under an inert atmosphere.

The reaction can be carried out at atmospheric, subatmospheric, or superatmospheric pressures.

Other catalysts, salts, diluents, processing aids, additives, and the like may also be present or added during the reaction provided they do not substantially interfere with the polymerization reaction, either directly or indirectly.

Reaction temperatures of up to about 250°C are generally sufficient for the polymerization reaction although higher temperatures can be used if necessary. The temperature will depend, of course, on the solvent boiling point and the reaction pressure and will also affect the reaction rate. In general, under atmospheric conditions, the reaction temperature will be from about 100°C to about 165°C in dimethylacetamide; to about 240°C in sulfolane; and to about 200°C in N-methylpyrrolidinone.

Obviously, the reaction solvent, the base, and the reaction temperature should be selected so as to obtain a reasonable polymerization rate and also to avoid degradation of the solvent, monomers or polymers which may cause interference with the polymerization. It is also preferable, of course, to select the reaction solvent and reaction temperature so as to maintain the growing polymer chain in solution.

Once the desired polymer molecular weight is achieved, the phenate end groups can optionally be reacted by introducing an end-capping reagent, such as methyl chloride to form the stable methyl ether end group, or alternatively, reagents to form other reactive or stable end groups, as desired.

The preferred rection conditions using the preferred monomers involves reacting, under argon or nitrogen atmosphere, essentially stoichiometric amounts of the monomers in the presence of from about 1 to about 50 percent excess of dried potassium carbonate in dimethylacetamide (or sulfolane) with toluene (or chlorobenzene) azeotrope at about 115°C (or 160°C) initially under reflux of the azeotropic solvent, gradually increasing the reaction temperature from about 155 to about 165°C (or from about 180 to about 220°C) by allowing some toluene (or chlorobenzene) to distill. The reaction is held at this temperature until the desired molecular weight polymer is formed, usually in about 0.5 to about 8 hours. The reaction is

diluted with dimethylacetamide (or sulfolane or other suitable solvent) and cooled to about 100 to about 150°C. Methyl chloride or other suitable end-capping agent is then sparged through the reaction mixture for about 0.2 to about 2 hours to end-cap the polymer.

Commonly practiced polymer recovery methods can be used, such as coagulation into water or an organic (non)solvent; the recovered polymer is optionally washed with water and alcohol or other solvents and dried. Other recovery methods such as extraction, filtration, devolatilization, and the like, may also be used.

The second step of this process, i.e. the conversion of the polyketals to the polyaryletherketones is conducted in the presence of water and an acid under heterogeneous or homogeneous conditions.

Generally, heterogeneous conversion is carried out by treating the polyketal with an excess of water, optionally, in the presence of an organic liquid and dilute acid catalyst. The polyketal is preferably in the form of finely divided particles or a film, either in solid form or in the melt, which are substantially insoluble under the reaction conditions. The weight ratio of water to polymer is preferably from 1 to 100, although greater amounts of water can be used. The acid catalyst is used preferably at concentrations of from 0.0001 to 20 weight percent of the water present and, most preferably from 0.005 to 2 weight percent. Suitable acid catalysts include strong mineral acids, such as hydrochloric acid, nitric acid, fluorosulfonic acid, sulfuric acid, and strong organic acids, such as p-toluenesulfonic acid, trifluoromethane sulfonic acid.

Although it can be readily appreciated to one skilled in the art that the particular combination of reaction parameters used for this conversion reaction, including but not limited to such variables as the particle size or film thickness of the polyketal, the amount of acid catalyst and excess water, the reaction pressure, and the like, will influence the rate of conversion of polyketal to polyaryletherketone, it is not readily apparent that reaction temperature is particularly critical.

Thus, if the glass transition temperature (Tg) of the polyketal (or polyaryletherketone) is greater than about 100°C, then heterogeneous conversion in the presence of dilute aqueous acid at or near the atmospheric boiling point of water is exceedingly slow and inefficient. Even at reaction temperatures above 100°C but still below the glass transition temperature (Tg) of the polyketal (or polyaryletherketone), the rate of conversion of polyketal to polyaryletherketone is slow. However, reaction temperatures at or preferably above the polymer glass transition temperature result in markedly improved conversion rates of polyketal to polyaryletherketone.

When the Tg of the polyketal is greater than the Tg of the polyaryletherketone, the heterogeneous reaction temperatures at or above the Tg of the polyketal are preferred. When the Tg of the polyketal is less than the Tg of the polyaryletherketone, reaction temperatures at or above the Tg of the polyaryletherketone are preferred. Generally, the glass transition temperatures of the polyketal and polyaryletherketone polymers of this invention are above 100°C and, therefore, rection temperatures from about 100° to over 300°C may be advantageously employed. Such reactions may be conducted under pressure or using pressurized steam.

After the desired degree of conversion is obtained, the polymer product is conveniently isolated by filtration or other means, optionally washed with water and solvents such as acetone or alcohol, and dried.

Generally, the homogeneous conversion of polyketal to polyaryletherketone is conducted by treating the polyketal with concentrated aqueous acid in which the polyaryletherketone product is at least partially soluble, and preferably totally soluble.

Thus, one part polyketal is dissolved, either partially or completely, particularly in one part to 200 parts, preferably in 5 to 20 parts, concentrated acid containing at least a stoichiometric amount of water based on the ketal functionality of the polyketal. Preferably a stoichiometric excess of water is used, but high water concentrations will obviously reduce the solubility of the polymers. The reaction is conducted at temperatures of from −20°C to 200°C, preferably, at from 10°C to 70°C.

The concentrated acid may be any strong mineral or organic acid or combination of acids in which the polyaryletherketone product is at least partially, preferably completely, soluble. These acids include trifluoromethanesulfonic acid, fluorosulfonic acid. Concentrated sulfuric acid is the preferred reaction medium. The acid contains from 1 to 40 percent, and preferably, from 2 to 20 percent, water by weight.

The reaction is essentially complete within a few seconds or up to several hours. Generally, a reaction time of less than four hours is sufficient when the preferred aqueous sulfuric acid is used at 25°C. It will be appreciated that excessively long reaction times, especially at high reaction temperatures, may lead to undesirable side reactions and therefore should be avoided.

A number of methods may be used to recover the polyaryletherketone product from the concentrated aqueous acid reaction mixture, including coagulation of the polymer in excess water or other media which does not dissolve the polymer. The recovered polymer may then be washed or extracted with water or other suitable solvents to remove residual acid.

## Examples

In the Examples, the reduced viscosity (RV) of the polymer was measured in concentrated sulfuric acid at 25°C (1 gm of polymer dissolved in 100 ml of concentrated sulfuric acid). The calculation of the RV is based on the weight of the original polymer sample, regardless of any chemical reaction which may have taken place in the sulfuric acid solution. Therefore, the RVs are regarded as the RV in concentrated sulfuric acid solution (1 gm/100 ml solution) and not necessarily as the RV of the polymer itself.

Example 1

Preparation of 2,2-bis(4-hydroxyphenyl)-1,3-dioxolane

A one-liter flask fitted with a mechanical stirrer, jacketed condenser, and a variable take-off distillation head was charged with 66 gm of 4,4'-dihydroxybenzophenone (97%, 0.30 mmole), 186 gm of ethylene glycol (3 moles), 96 gm of trimethylorthoformate (0.9 mole), and 150 gm of acidic montmorillonite clay (K—10 obtained from United Catalysts). The reaction mixture was stirred and heated in an oil bath (75 to 80°C) for hours while methylformate and methanol were distilled over. An additional 96 gm of trimethylorthoformate was added and heating continued at said temperature for 25 hours. A sample was taken from the reactor and NMR analysis showed 82% conversion to ketal. An additional 36 gm of trimethylorthoformate was added and the reaction heated in a bath (100 to 110°C) until distillation had essentially stopped.

The rection was cooled, diluted with ethyl acetate, filtered to remove the clay, and the clay washed with ethyl acetate. The organic solution was washed four times with 2% solution of sodium bicarbonate, once with saturated sodium chloride solution, dried over sodium sulfate, filtered, and the solvent removed under vacuum. The crude product was slurried with 200 ml of methylene chloride, filtered, and dried to give 57.6 gm of product. Gas chromatographic analysis of the acetylated product (acetic anhydride, pyridine) showed it to contain 86.6% of the desired ketal and 13.4% starting 4,4'-dihydroxybenzophenone. The conversion based on isolated product was 64.8%; the total isolated yield was 76.9% including recovered ketone.

Example 2

2,2-Bis(4-hydroxyphenyl)-1,3-dioxolane was prepared by the procedure of Example 1 by mixing together, in a reaction flask fitted with a mechanical stirrer, thermometer, and variable take-off distillation head, 99 gm of 4,4'-dihydroxybenzophenone (97% pure, 0.448 mole), 269 gm of ethylene glycol (4.3 moles), 96 gm of trimethyl orthoformate (0.91 mole), and 150 gm of montmorillonite clay (K—10, United Catalysts) and heating the reaction mixture at 70 to 90° to give slow distillation of the reaction by-products. After about 18 hours, 66 gm of distillate was collected. An additional 64 gm of trimethylorthoformate (0.60 mole) was added to the reaction mixture and the reaction continued. After a total of 24 hours reaction time, NMR analysis of a reaction sample showed about 2.23 mole ratio of ketal product to ketone starting material; after a total of 18 hours reaction time, NMR analysis of a second reaction sample showed that the mole ratio was about 19 (about 95% conversion to ketal product). The reaction mixture was heated for an additional 8 hours and then cooled; NMR analysis again showed about 95% conversion.

The reaction mixture was worked up as in Example 1 by dilution with ethyl acetate, filtration to remove the clay, extraction with basic water to remove glycol, drying over anhydrous sodium sulfate, and removal of solvent to give 115 gm of crude product. The product was ground, stirred twice with methylene chloride, filtered, and the solid dried under vacuum to give 99.9 gm of creamy white product. Gas chromatographic analysis of the derivatized diacetate product (acetic anhydride, pyridine) showed it contained 95.4 wt % ketal and 4.6% ketone. The isolated yield of ketal was 82.5% (87.2% yield including recovered ketone).

Example 3

Preparation of Polyketal

A 500 ml 4-neck reaction flask fitted with a mechanical stirrer, thermometer, argon inlet, jacketed Vigreaux column, Dean-Stark trap and condenser was charged with 23.16 gm of 2,2-bis(4-hydroxyphenyl)-1,3-dioxolane (97.95 percent ketal and 2.05 percent of 4,4'-dihydroxybenzophenone by vpc analysis, 90.03 mmoles total monomers), 19.64 gm of 4,4'-difluorobenzophenone (90.03 mmole), 160 ml of dried dimethylacetamide, 115 ml of toluene, and 18.68 gm of dried anhydrous potassium carbonate. The reaction mixture was stirred and purged with argon for one hour, heated to reflux in an oiil bath, and the reflux temperature was gradually increased from 119° to 150°C by removing distillate from the trap and adding small amounts of toluene to the reaction flask. After about 5.5 hours, a solution of 0.02 gm of 4,4'-difluorobenzophenone in 2 ml of dimethylacetamide was added to the viscous reaction mixture to assure stoichiometry. After an additional 30 minutes, the heating bath was removed and 135 ml dimethylacetamide was added to dilute the reaction.

The reaction temperature was then adjusted to 110°C and methyl chloride gas was bubbled through the reaction mixture for about one hour (using the argon inlet tube) to end-cap the phenate end-groups, during which the yellow-green reaction mixture changed to a creamy beige color. The reaction mixture was then heated to 150°C and filtered through a sintered glass funnel. The filtrate was coagulated into excess isopropanol and the polymer washed with isopropanol, distilled water, and methanol and dried under vacuum at 100°C to give 35.5 gm of polymer (89.8 percent isolated yield). The RV of the polymer was 0.80 in chloroform (0.2 percent, 25°C) and 1.64 in concentrated sulfuric acid.

The polymer was molded at 250°C to give a clear, tough plaque with excellent color with the following mechanical properties :

| | |
|---|---|
| Tensile modulus (ASTM D—638) | $196.6 \times 10^6$ kg/m$^2$ (280,000 psi) |
| Tensile strength (ASTM D—638) | $6.69 \times 10^6$ kg/m$^2$ (9,520 psi) |

| | |
|---|---|
| Yield strength (ASTM D—638) | $6.12 \times 10^6$ kg/m$^2$ (8,800 psi) |
| Yield elongation (ASTM D—638) | 5.0% |
| Elongation at break (ASTM D—638) | 115% |
| Pendulum impact strength (ASTM D—256) | >20.7 MJ/m$^3$ (>250 ft-lbs/in$^3$) |
| Glass transition temperature | 155°C |

The polymer was amorphous, i.e., exhibited no melting transition by differential scanning calorimetry.

Example 4

Hydrolysis of Polyketalketone

A Parr rocker bomb glass lined reactor was charged with 1.0 gm polyketalketone having an RV of 1.24 and 100 ml of 0.2 percent aqueous sulfuric acid. The glass liner was stoppered, placed in the bomb, sealed, placed in the rocker assembly and heated to 130°C over 15 minutes and held at this temperature for 2.25 hours, then heated to 150° over 15 minutes and held at this temperature for 2.25 hours, then heated to 150° over 15 minutes and held at this temperature for two hours, and then heated to 250°C and held at this temperature for 24 hours. The reaction was then cooled, the polymer removed from the reactor, washed with 300 ml water, stirred twice with 300 ml hot water, washed with 300 ml methanol and dried under vacuum for about 12 hours at 100°C to give 0.88 gm product. The product had an RV of 1.375 [theoretical calculated RV = 1.378 based on loss of ketal groups with no chain scission] and showed a melting transition at 362°C by differential scanning colorimetry. Thermal gravimetric analysis give 0.55 percent net weight loss at 425°C under nitrogen. The infrared spectrum showed no detectable aliphatic absorptions due to ketal groups. The polymer showed a crystallization time (by DSC) of 42 seconds upon heating to 380°C and rapidly cooling to 310°C.

A polymer sample with an RV = 1.96 had the following mechanical properties:

| | |
|---|---|
| Tensile modulus | $281 \times 10^6$ kg/m$^2$ (400,000 psi) |
| Tensile strength | $9.562 \times 10^6$ kg/m$^2$ (13,600 psi) |
| Yield strength | $9.281 \times 10^6$ kg/m$^2$ (13,200 psi) |
| Yield elongation | 10% |
| Elongation at break | 31% |
| Pendulum impact strength | 16.9 MJ/m$^3$ (204 ft-lbs/in$^3$) |
| Tg | 165°C |
| M.P. | 366°C |

This highly crystalline, tough polymer was also extremely resistant to attack by solvents and was not adversely affected by exposure under stress (281 Kp/cm$^2$; 4,000 psi) for at least four hours to acetone, toluene, methyl ethyl ketone, or ethyl acetate and at 422 Kp/cm$^2$ (6,000 psi) stress for eight hours was not adversely affected by carbon tetrachloride or isopropanol.

Examples 5 to 11

Additional runs were made by the procedure as described in Example 4 under the conditions as shown in Table I. Note that runs 5 to 8 gave high melting polymer and low weight loss. Example 9 shows that at a reaction temperature near the polymer glass transition temperature (155—160°C), the melting point of the polyarylethetherketone is somewhat low and a higher weight loss is observed, indicating less than complete conversion to polyarylethetherketone. Example 10 (comparative) shows that even extended reaction time at 150°C, a temperature below the polymer Tg, results in a high weight loss and a very weak melting point transition. Example 11 (comparative) shows that in boiling sulfuric acid very little hydrolysis of the ketal groups occurred.

Control A shows that untreated polyketals used for Example A shows that untreated polyketals used for Examples 5 to 10 exhibit observed weight losses of over 10% essentially in agreement with the theoretical weight loss for complete convrsion to polyarylethetherketone. Thus, the weight losses observed for Example 5 to 8 indicate essentially complete conversion to polyarylethetherketone. The product of Example 9 has undergone approximately 85—90% conversion whereas the product of Example 10 has undergone only approximately 50% conversion. Control B as compared to Example 11 shows that only

about 5 to 10% conversion to polyaryletherketone occurred.

TABLE I

| Example | Acid Catalyst | Reaction Time (hr.)/ Temp. (°C) | m.p. (DSC), °C | Infrared —$CH_2$— bands | Product Net Weight Loss, %(a) |
|---|---|---|---|---|---|
| 5 | 0.02N $H_2SO_4$ | 2/150<br>40/200—250 | 359 | no | 0.47 |
| 6 | 0.04N $H_2SO_4$ | 4/150<br>20/200 | 360 | no | 0.48 |
| 7 | 0.02N HCl | 4/150<br>20/200 | 361 | no | 0.20 |
| 8 | 0.02N HCl | 4/150<br>20/175 | 360 | no | 0.24 |
| 9 | 0.02N HCl | 4/150<br>20/160 | 351 | yes | 1.5 |
| 10 | 0.02N $H_2SO_4$ | 48/150 | 355(W) | yes | 5.6 |
| 11 | 1.0N $H_2SO_4$ | 24/100 | none | yes | 9.0 |
| A | — | — | none | yes | 10.2—10.5<br>[10.1][b] |
| B | — | — | none | yes | 9.5[9.9][b] |

W = weak, broad transition
(a) Measured afer 20 minutes at 425°C under nitrogen
(b) Value in brackets indicates theoretical weight loss based on initial ketal content of the polyketal and 100% conversion of ketal groups to carbonyl groups.

Example 12

Hydrolysis of Polyketal in Concentrated Sulfuric Acid

Polyketal (10 gm, RV = 0.93) was dissolved in 250 ml 85% sulfuric acid. After five hours with stirring at room temperature (about 25°C) the acid solution was coagulated into 2000 ml of ice water. The polymer was then washed thoroughly with hot water and dried to give 8.4 gm polyketone (98% yield). The isolated polyketone gave an elemental analysis of 79.49%C, 4.15%H, 16.12%O, and 0.066%S (theoretical 79.58%C, 4.11%H, 16.319%O), a net weight loss at 425°C of 0.35 percent, and an RV of 1.22.

Compression molded plaques of a polyketone (RV = 1.49) prepared as described above had the following properties.

| | |
|---|---|
| Tensile Modulus | $296.7 \times 10^6$ kg/m$^2$ (422,000 psi) |
| Tensile Strength | $10.2 \times 10^6$ kg/m$^2$ (14,500 psi) |
| Elongation % | 6.3 |
| Pendulum Impact Strength | 10.2 MJ/m$^3$ (123 ft-lbs/in$^3$) |
| Tg (°C) | 155 |
| M.P. (by DSC, °C) | 372 |

Control Preparation of Polyketone "Directly"

The reaction of 4,4'-dihydroxybenzophenone (4.28 gm, 20 mmole) with 4,4'-difluorobenzophenone (4.36 gm, 20 mmole) was carried out as described in Example 3, except at a reduced scale, with 4.15 gm of potassium carbonate, 35 ml of dimethylacetamide, and 25 ml of toluene. After reaching 150°C under toluene reflux, the reaction was held at this temperature for over three hours with no apparent increase in solution viscosity and then terminated and recovered as described in Example 3. The isolated polymer had

an RV of 0.12.

This example illustrates that attempting to prepare crystalline polyketone under the above reaction conditions affords very low molecular weight product.

### Example 13

Copolymerization with hydroquinone

The polymerization was conducted by the procedure as described in Example 3 employing 20.214 gm of 2,2-bis(4-hydroxyphenyl)-1,3-dioxolane (containing 4.57 wt % 4,4'-dihydroxybenzophenone by gpc analysis: total bisphenol content 0.079 moles), 8.699 gm of hydroquinone (0.079 moles), 34.484 gm of 4,4'-difluorobenzophenone (0.158 moles), 24.049 gm of potassium carbonate (0.174 moles) in 210 ml of sulfolane with an initial charge of 130 ml of toluene. The reaction mixture was purged with argon, heated to 160°C to commence reflux, held one hour at this temperature, heated to 180° and held at this temperature for two hours, and then gradually heated in stages to 220° over 3 hours and held at 220° for an additional hour. The viscous reaction mixture was diluted with 50 ml sulfolane, cooled to 145° and methyl chloride sparged through the reaction mixture to end-cap the polymer.

The polymer solution was coagulated into 3 liters of methanol in a blender, washed twice with methanol and once with water in the blender, extracted twice, for one hour, with hot aqueous hydrochloric acid (1%) and washed one hour with hot water, filtered, washed with methanol and dried in the vacuum oven to give 50.9 gm of polymer with a RV of 1.39.

The polymer (2.5 gm) was dissolved in 100 ml 88.8% concentrated sulfuric acid at room temperature (about 25°C). After 5 hours, the solution was coagulated into ice water. The isolated polymer was thoroughly washed with hot water and dried to give 2.15 gm of polyaryletherketone having a melting point of 343°C (determined by differential scanning calorimetry) and an RV of 1.42.

### Example 14

Polyketal was prepared following the procedure as described in Example 13 by reacting 2,2-bis(4-hydroxyphenyl)-1,3-dioxolane (18.42 gm, 0.072 moles total bisphenol based on 95.43% ketal and 4.57% 4,4'-dihydroxybenzophenone by GPC analysis), difluorodiketone (22.72 gm, 0.07056 moles) of the structure

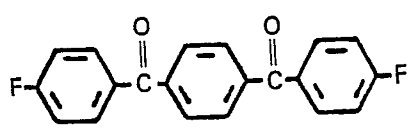

potassium carbonate (11.94 gm, 0.084 moles) in 160 ml sulfolane with an initial charge of 115 moles of toluene. The polymerization was conducted at 180°C for 2 hours and then at 220°C for 4 hours after which time additional difluorodiketone (0.23 gm, 0.7 millimole) was added to the reaction. The reaction was heated for 2 hours at 220°, another portion of difluorodiketone (0.23 gm) was added. After heating for 2.5 hours, 0.69 gm (3.2 millimole) of 4,4'-difluorobenzophenone was added to end cap the polymer. After one hour at 220°, the reaction mixture was cooled to 180° and methyl chloride was sparged through the reaction mixture for one hour to further end-cap the polymer. The reaction mixture was cooled and the polymer recovered by coagulation and washed with water and methanol. The recovered, dried polyketal polymer (37.2 gm) had an RV of 0.88 and was amorphous.

The polyketal (25 gm) was dissolved in 600 gm (87.2%) of sulfuric acid. After stirring at room temperature for 4.5 hours, the polymer was isolated by coagulation in ice water. The polymer was ground in water using a high speed Waring blender and washed with 2.5% potassium bicarbonate solution and then washed thoroughly with water and methanol. The yield of dry polymer was 22.7 gm (essentially quantitative). The polymer melted at 375°C (by DSC) and had an RV of 1.04.

Crystallinity and Structural Characterization of Polyaryletherketones

Polyaryletherketones X and Y prepared by the procedure as described in Examples 4 and 12 were compression molded into films at 400°C. The 1% secant moduli of the films [ASTM Method D—638] were measured at various temperatures. Differential scanning calorimetry (DSC) analysis of these films were obtained by heating the films to 400°C at 10°/min, cooling from 400°C to room temperature (about 25°C) to measure the heat of crystallization and then reheated at 10°C/min to measure the heat of fusion.

A molded film sample of polyaryletherketone, Control C, which had been prepared by a process employing boron trifluoride in hydrogen fluoride from p-phenoxybenzoyl chloride [$C_6H_5O—C_6H_4—COCl$] essentially as described in US—A—3,953,400 was also examined. The polymers, X and Y, of this invention and Control C nominally have the same basic unit structure, namely

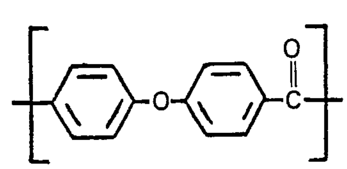

Table II shows that polymers X and Y exhibit moduli which are significantly greater than those of the polymer of Control C at temperatures of from about 200°C up to about 350°. The measured heats of crystallization and fusion for polymers X and Y were also found to be significantly greater than for the polymer of Control C.

TABLE II

| Temp. (°C) | Modulus: Polymer X | | Polymer Y | | Control C | |
|---|---|---|---|---|---|---|
| | kg/m$^2$ | psi | kg/m$^2$ | psi | kg/m$^2$ | psi |
| 200 | $44.29 \times 10^6$ | (63,000) | $54.14 \times 10^4$ | (77,000) | $23.90 \times 10^6$ | (34,000) |
| 250 | $30.94 \times 10^6$ | (44,000) | $39.37 \times 10^6$ | (56,000) | $16.17 \times 10^6$ | (23,000) |
| 300 | $17.57 \times 10^6$ | (25,000) | $22.50 \times 10^6$ | (32,000) | $10.55 \times 10^6$ | (15,000) |
| 350 | | (7,400) | | (13,600) | | (9,200) |
| Heat of Crystallization (cal/gm) | | (10.6) | | (12.3) | | (6.3) |
| Heat of Fusion (cal/gm) | | (8.3) | | (9.5) | | (5.5) |

These data show that the polymer prepared by the two-step process of this invention may exhibit a greater degree of crystallinity than the polymer of Control C of similar structure which was prepared by the boron trifluoride/hydrogen fluoride process. The polyaryletherketones of this invention are thus distinguishable from those prepared using Friedel-Crafts acylation as described in the prior art.

Nuclear magnetic resonance spectra were obtained on polymer X, and Control C, and two polyaryletherketones, Control D and Control E prepared according to equations (1) and (2), respectively, employing the high temperature process as described in US—A—3,928,295. These carbon-13 spectra were obtained on solid polymer samples in an Andrews-Beam rotor using cross-polarization and magic angle spinning techniques on a Brucker CXP—200 spectrometer at 50.31 MHz (calibrated to better than 0.1 ppm and resonances relative to external tetramethylsilane).

The polymers exhibited four major resonance peaks (bands) at approximately, 193, 158, 133, and 118 ppm consistent with the general structure (i)

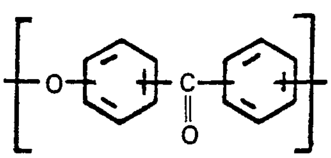

(i)

wherein the carbonyl carbon resonance occurs at 193 ppm and the aromatic carbon resonances occur at 158, 133, and 118 ppm and, more specifically, consistent with a predominant para orientation as in (ii)

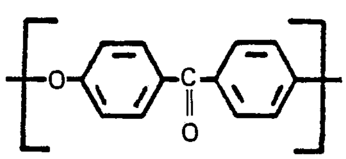

(ii)

(for polymer X, these resonances occurred at 193.2, 158.3, 132.8, and 118.3 ppm).

Comparison of the spectra of polymer X and Control C showed that significantly broader resonance bands were observed for the polymer of Control C, especially those at 158, 133, and 118 ppm, than for the bands of polymer X. The peak width at half height, a measure of peak broadening, was about twice as wide in the polymer of Control C than for polymer X.

The narrower resonances observed for polymer X are consistent with a more uniform para orientation of the polymer backbone (structure ii) and very little or no contribution from meta or ortho orientations (structure i). Conversely, the broader resonance of Control C are consistent with the presence of meta and/

or ortho orientations in the backbone which may arise from meta and/or ortho acylation reactions during the preparation of the polymer of Control C. The more uniform, highly para structure of polymer X is also consistent with the greater degree of crystallinity and higher moduli observed for the polymers of this invention (Table II).

The polymers prepared by high temperature processes, Controls D and E, also exhibited broader resonance bands than that for polymer X. In addition, both the polymers of Controls D and E exhibited detectable shoulder resonances at about 161 ppm near the 158 resonance and also at about 136 ppm near the 133 resonance, the latter particularly noticeable in the polymer of Control D. The broader resonance and particularly the shoulder peaks observed in control polymers D and E clearly indicate the presence of polymer structural units other than the para backbone unit (structure ii), such as those due to meta and/or ortho orientations (structure i) or those due to chain branching. The nuclear magnetic resonance spectra are consistent with a more highly uniform para orientation of the polymer backbone of polyaryletherketone prepared by the process of this invention which uniformity is not readily achieved in the analogous polyaryletherketones prepared by nucleophilic displacement employing high reaction temperatures as described in the prior art.

## Claims

1. A process for the preparation of a polyaryletherketone which comprises:

(a) preparing a polyketal by reacting one or more compounds of the formula: HO—K'—OH or HO—L'—X and optionally one or more bisphenols HO—W—OH wherein K' is the residue of a substituted or unsubstituted aromatic or heteroaromatic nucleus containing from 10 to 40 carbon atoms and also containing at least one backbone difunctional unit of the following formula:

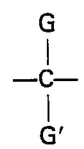

said unit being stable to the basic polymerization conditions employed, wherein G and G' are selected from the group consisting of halide, —OR, —OCOR$^1$, —NR$^2$R$^3$, —NHCOR$^4$, —SR$^5$, wherein

R and R$^1$—R$^5$ are each independently alkyl, aryl, or arylalkyl of from 1 to 20 carbon atoms;

R and R$^1$—R$^5$ may be substituted or unsubstituted, may contain heteroatoms, and may also be connected by a chemical bond thus connecting G and G', and wherein G and G' are combined and selected from the group consisting of =N—N—Ar, =NOH, =N—Ar and =N—NHCONR$^6$R$^7$, wherein Ar and Ar' are substituted or unsubstituted aryl of from 5 to 12 carbon atoms and R$^6$ and R$^7$ are hydrogen or as defined for R$^{1-5}$ above, with the proviso that the R's should not contain functionality which is base sensitive;

L' is the residue of a substituted or unsubstituted aromatic or heteroaromatic nucleus of from 10 to 40 carbon atoms containing at least one electron-withdrawing group situated ortho or para to X and also containing at least one difunctional backbone unit —C(G)(G')— as defined above and wherein X is a leaving group displaced during the polymerization reaction of HOK'OH;

W is the residue of a substituted or unsubstituted aromatic or heteroaromatic nucleus of from 5 to 30 carbon atoms;

with coreactant which is one or more monomers X—Z—Y or HO—L'—X with itself or HOK'OH with HO—L'—X and ZXY, where Z is the residue of a substituted or unsubstituted aromatic or heteroaromatic nucleus of from 5 to 30 carbon atoms containing at least one electron-withdrawing group ortho or para to X and Y, wherein X and Y are leaving groups, which are displaced during the polymerization reaction; and wherein the polyketal has a molefraction of $-\!\!\!+\!\!$O—K'—O$+\!\!\!-$ units or $-\!\!\!+\!\!$O—L'—O$+\!\!\!-$ units greater than or equal to 0.1, said reaction being carried out in a dipolar aprotic solvent in the presence of a base, and

(b) converting the polyketal to a polyaryletherketone in the presence of water and an acid under heterogeneous or homogeneous conditions wherein the heterogeneous hydrolysis occurs at a temperature above the glass transition temperature of the polyketal.

2. A process as claimed in claim 1 wherein in X—Z—Y Z is

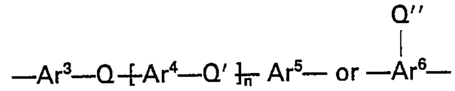

where Ar$^{3-6}$ are substituted or unsubstituted aryl radicals of from about 5 to 18 carbon atoms, n is 0 to 3, Q and Q' are electron withdrawing groups ortho or para to X and Y, and selected from the group consisting of —SO$_2$—, —CO—, —SO—, —N=N—, —C=N—, —C=N(O)—, imide, vinylene (—C=C—) and substituted vinylene, perfluoroalkyl, —P(O)R$^8$—, wherein R$^8$ is a hydrocarbon group, ethenyl (C=CH$_2$), C=CF$_2$, C=CCl$_2$, and Q'' is an electron withdrawing group ortho or para to X and Y and selected from the group consisting of —NO$_2$—, —CN, perfluoroalkyl or hetero aromatic nitrogen, and wherein the displaceable leaving groups

X and Y are halogen, $-NO_2$, $-OSOR^8$, or $-OSO_2R^8$;
optionally one or more bisphenols HO—W—OH, where W is selected from the following:

$$-Ar^3-Q-[Ar^4-Q']_n-Ar^5-,\ -Ar^7-\ \text{and}\ -Ar^8-V-Ar^9-,$$

where n, $Ar^{3-5}$, Q, and Q' are as defined above, $Ar^{7-9}$, are as defined for $Ar^{3-5}$, and wherein V is a single bond, —O—, —S—, —S—S— or a difunctional hydrocarbon radical of from 1 to 20 carbon atoms, including alkyl, aryl, and alkylaryl radicals and rings fused to both $Ar^8$ and $Ar^9$;

3. A process as claimed in claim 1 or claim 2 wherein in HO—K'—OH K' is selected from

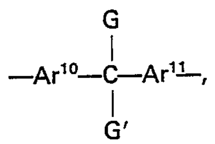

and $-Ar^3-Q^3-[Ar^4-Q^4]_p-Ar^5-$

where G, G', and $Ar^{3-5}$ are as defined above, p is an integer of 1 to 5, $Q^3$ and $Q^4$ are as defined for Q, Q', and V, with the proviso that at least one $Q^3$ and $Q^4$ is the group —C(G)(G')—, and $Ar^{10}$ and $Ar^{11}$ are substituted or unsubstituted aryl of from about 5 to about 18 carbon atoms, and $-Ar^8-V-Ar^9-$ as defined in claim 2.

4. A process as claimed in claim 2 or claim 3 wherein W is selected from the following:

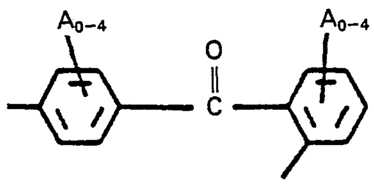
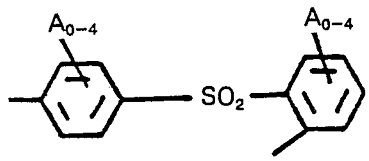
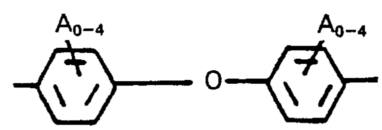

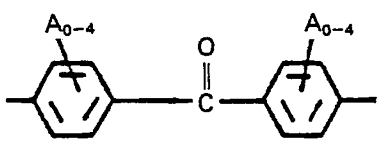
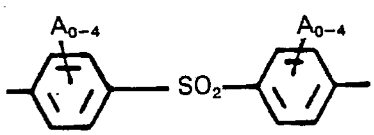
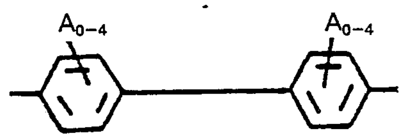

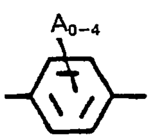 , 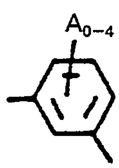
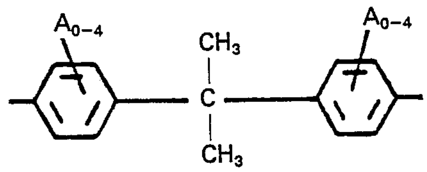

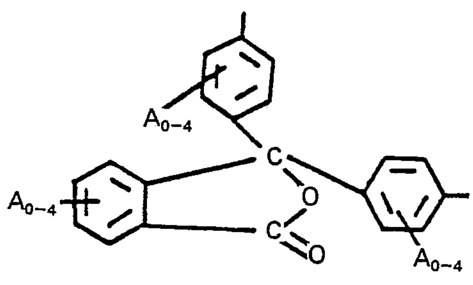
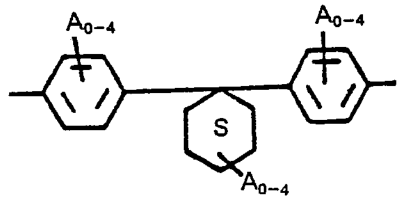

and isomers thereof, and wherein A is a non-interfering substituent group unreactive under the polymerization conditions and independently selected from the group of common organic substituents including hydrogen, alkyl, aryl, halogen, cyano, and wherein X and Y are halogen or nitro.

5. A process as claimed in any of the preceding claims wherein HO—L'—X is selected from the following:

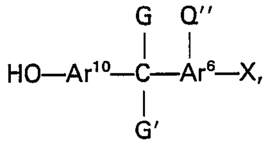, 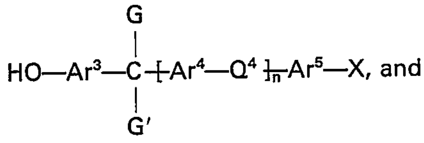, and $HO-Ar^3-[Q^3-Ar^4]_n-Q^4-Ar^5-X$

wherein $Ar^{3-6}$, $Ar^{10}$, Q'', G, and G', are as defined above, $Q^4$ is as defined above with the proviso that at least one $Q^4$ is defined as for Q and Q' and is ortho or para to X, $Q^3$ is as defined above with the proviso that at least one $Q^3$ is —C(G)(G'), and n is 1 to 5, and wherein X is halogen or nitro.

6. A process as claimed in any one of the preceding claims wherein in X—Z—Y, Z is selected from the following:

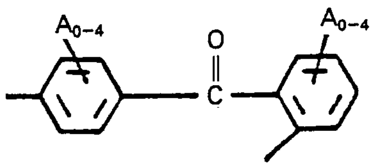, 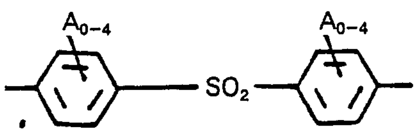, 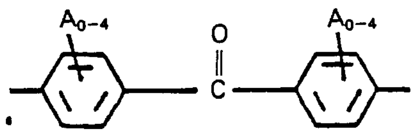

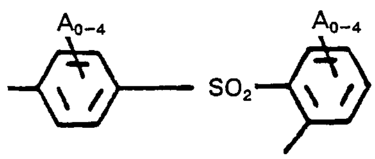 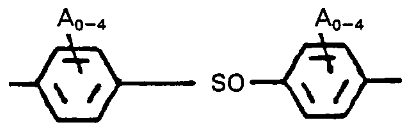

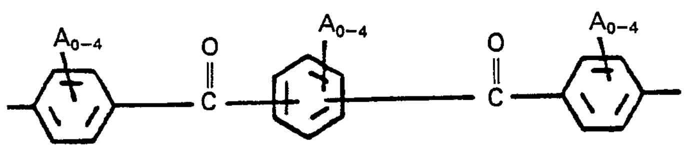,

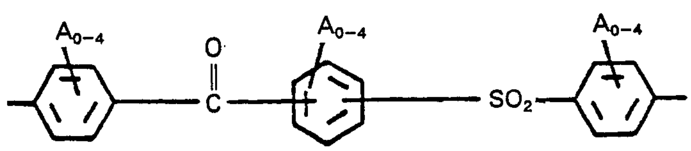,

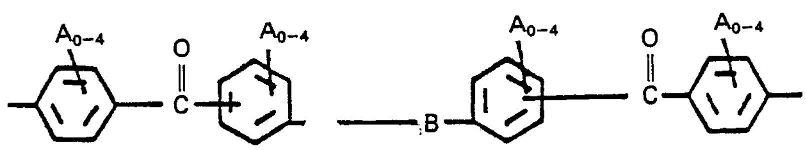,

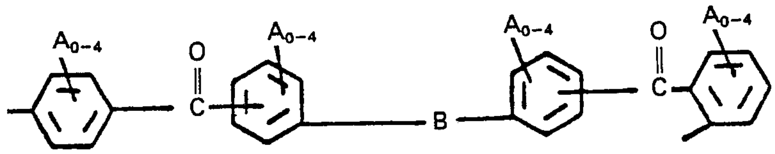,

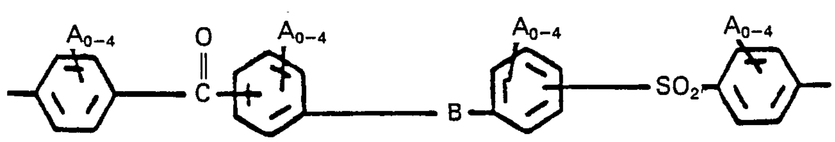,

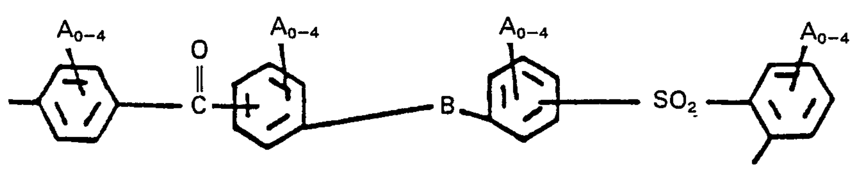

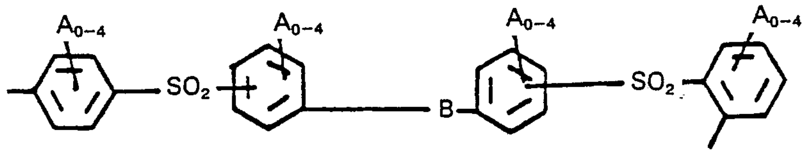
,

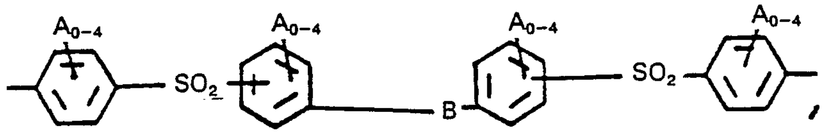
,

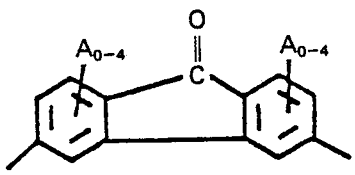

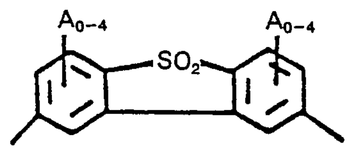

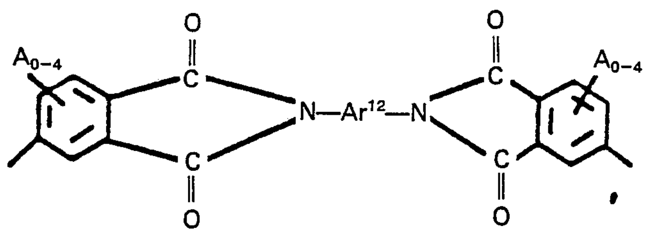
,

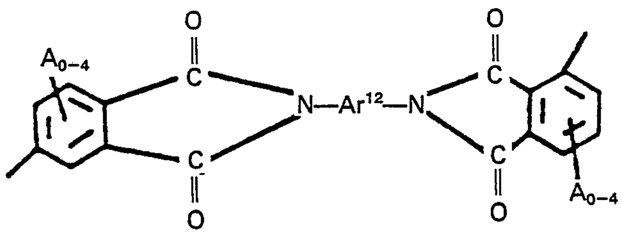

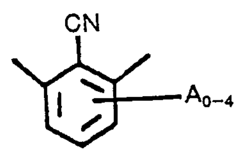

and isomers thereof, and wherein B is defined as above for V, Q, and Q', $Ar^{12}$ is defined as above for $Ar^{1-11}$, and A is a non-interfering substituent group unreactive under the polymerization conditions and independently selected from the group of common organic substituents including hydrogen, alkyl, aryl, halogen, cyano, and wherein X and Y are halogen or nitro.

7. A process as claimed in any one of the preceding claims wherein in HO—L'—X is selected from the following:

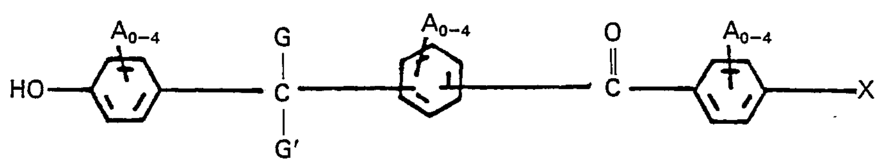

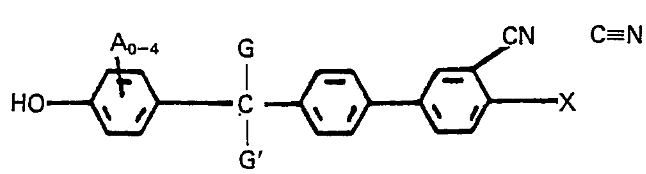

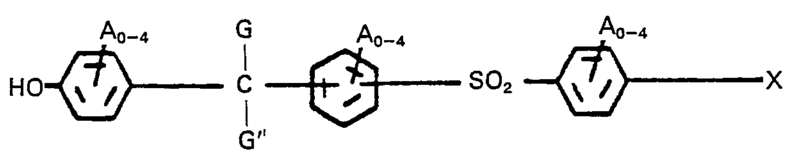

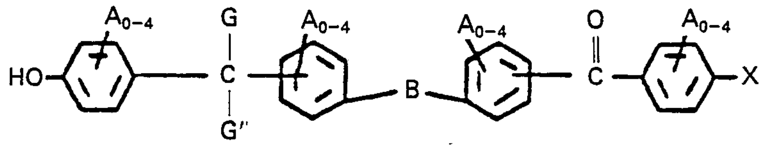

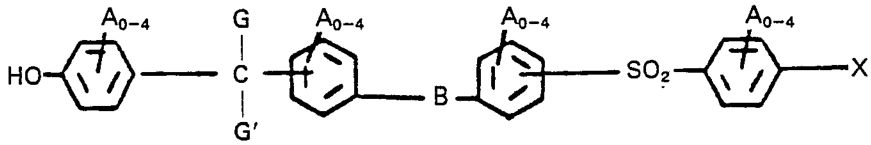

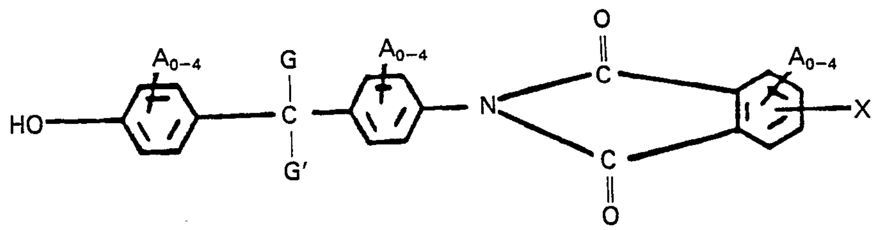

and isomers thereof, and wherein A and B are as defined above and X is F, Cl, or $NO_2$; G and G′ are —OR, —SR, or —$NR_2$ wherein R is a substituted or unsubstituted alkyl, aryl, arylalkyl of from 1 to 20 carbon atoms and may contain heteroatoms or other non-interfering functional groups with the proviso that R not contain functionality which is base sensitive, and G and G′ may be the same or different and connected or unconnected.

8. A process as claimed in any one of the preceding claims wherein in HO—K′—OH, K′ is selected from

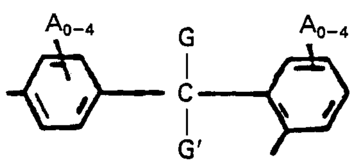

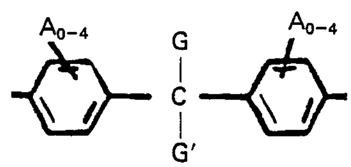

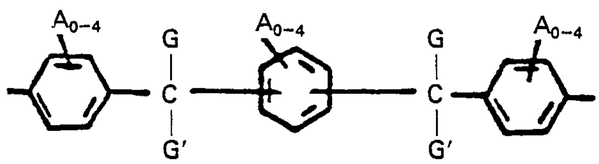

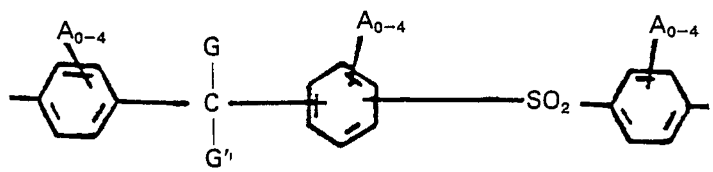

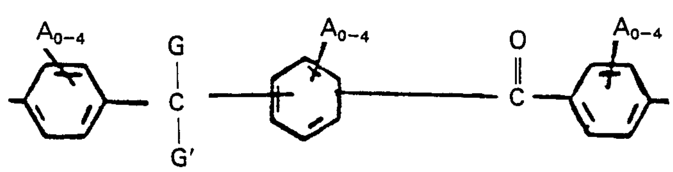

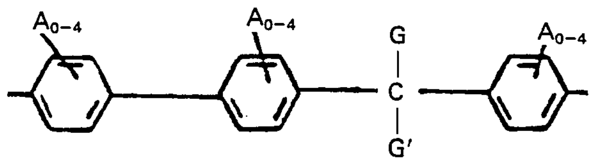

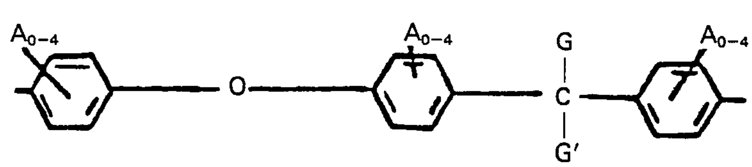

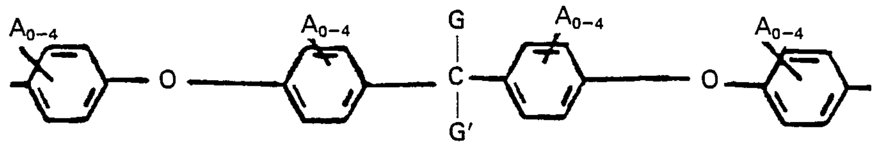

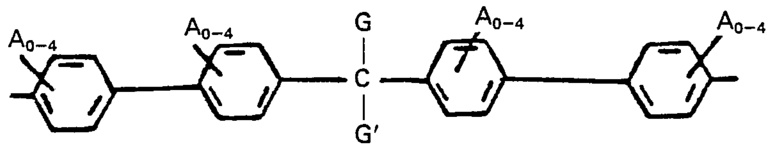

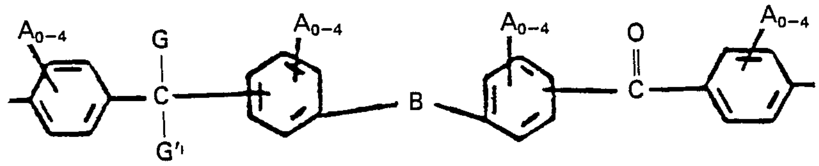

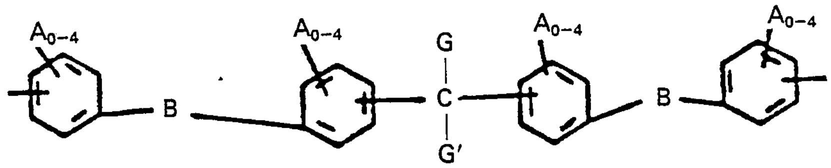

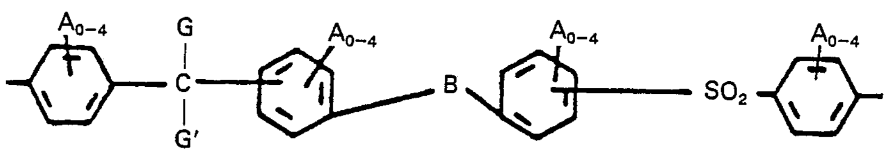

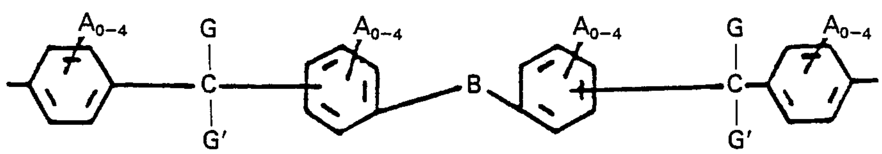

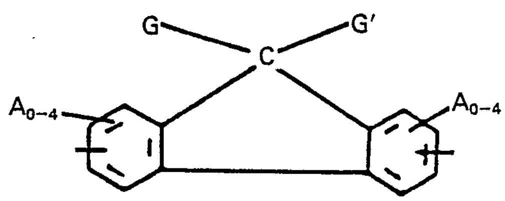

and isomers thereof, and wherein A and B are as defined above.

9. A process as claimed in any one of claims 6 to 8 wherein Z is

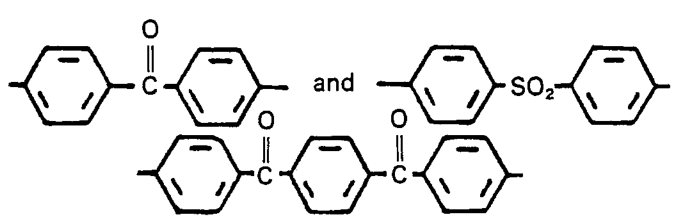
and

wherein X and Y are F or Cl and A is hydrogen.

10. A process as claimed in claim 8 or claim 9 wherein K′ is selected from

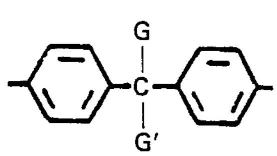

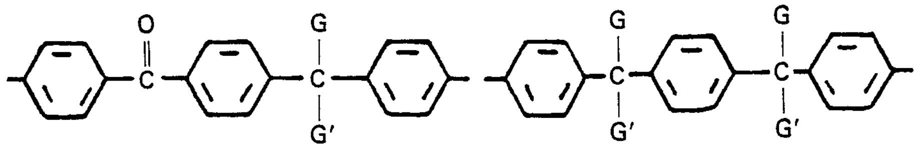

wherein A is hydrogen and G and G' are —OR, —SR, or —$NR_2$ wherein R is a substituted or unsubstituted alkyl, aryl, or aryl-alkyl of from 1 to about 20 carbon atoms and may contain heteroatoms or other non-interfering functional groups with the proviso that R should not contain functionality which is base sensitive, and G and G' may be the same or different and connected or unconnected; and most preferably G and G' are —OR.

11. A process as claimed in claim 1 wherein the acid of step (b) is selected from hydrochloric acid, nitric acid, fluorosulfonic acid, or sulfuric acid.

12. A process as claimed in claim 1 wherein the acid of step (b) is an organic acid selected from p-toluenesulfonic acid, or trifluoromethanesulfonic acid.

13. A process as claimed in any one of the preceding claims wherein in heterogeneous step (b) the weight ratio of water to polyketal is from 1 to 100.

14. A process as claimed in claim 13 wherein the acid is used at a concentration of from 0.0001 to 20 weight percent of the water present.

15. A process as claimed in claim 14 wherein the acid is used at a concentration of from 0.005 to 2 weight percent.

16. A process as claimed in any one of the preceding claims, wherein homogeneous conversion of polyketal to polyaryletherketone is conducted by treating the polyketal with concentrated aqueous acid in which the polyaryletherketone product is soluble.

17. A process as claimed in claim 16, wherein one part polyketal is dissolved, either partially or completely, in one part to 200 parts, concentrated acid containing at least a stoichiometric amount of water based on the ketal functionality of the polyketal.

18. A process as claimed in claim 17 wherein the polyketal is dissolved in 5 to 20 parts of the acid.

19. A process as claimed in claim 17 or claim 18 wherein the reaction is conducted at a temperature of from −20°C to 200°C.

20. A process as claimed in claim 19 wherein the temperature is from 10°C to 70°C.

21. A process as claimed in any one of claims 17 to 20 wherein the concentrated acid is sulfuric acid which contains from 1 to 40 percent water by weight.

22. A process as claimed in claim 21 wherein the sulfuric acid contains from 2 to 20 percent water by weight.

23. A process as claimed in claim 1 wherein K' is

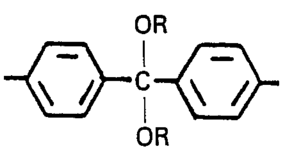

wherein R is a substituted or unsubstituted alkyl, aryl, or aryl-alkyl of from 1 to 20 carbon atoms and may contain heteroatoms or other non-interfering functional groups with the proviso that R should not contain functionality which is base sensitive and the R groups may be the same or different and connected or unconnected and X—Z—Y is selected from

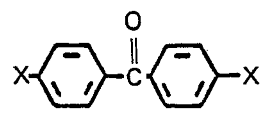 and 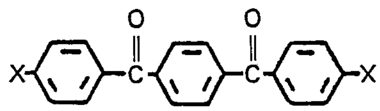

wherein X is F, Cl, or $NO_2$

**Patentansprüche**

1. Verfahren zur Herstellung eines Polyaryletherketons, das umfaßt:

(a) das Herstellen eines Polyketals durch das Umsetzen von einer oder mehreren Verbindungen der Formel: HO—K'—OH oder HO—L'—X und gegebenenfalls von einem oder mehreren Bisphenolen HO—W—OH, worin K' der Rest eines substituierten oder unsubstituierten aromatischen oder heteroaromatischen Kerns ist, der 10 bis 40 Kohlenstoffatome enthält und auch mindestens eine bifunktionelle Hauptketteneinheit der folgenden Formel enthält:

$$-\overset{G}{\underset{G'}{\overset{|}{\underset{|}{C}}}}-$$

wobei diese Einheit stabil gegenüber den angewandten basischen Polymerisationsbedingungen ist, worin G und G' ausgewählt sind aus der Gruppe, bestehend aus Halogenid, $-OR$, $-OCOR^1$, $-NR^2R^3$, $-NHCOR^4$, $-SR^5$, worin R und $R^1-R^5$ jeweils unabhängig Alkyl, Aryl oder Arylalkyl von 1 bis 20 Kohlenstoffatomen sind; R und $R^1-R^5$ substituiert oder unsubstituiert sein können, Heteroatome enthalten können und auch durch eine chemische Bindung verbunden sein können, auf diese Weise G und G' verbindend, und worin G und G' kombiniert und ausgewählt sind aus der Gruppe, die aus $=N-N-Ar$, $=NOH$, $=N-Ar$ und $=N-NHCONR^6R^7$ besteht, worin Ar und Ar' substituiertes oder unsubstituiertes Aryl von 5 bis 12 Kohlenstoffatomen und $R^6$ und $R^7$ Wasserstoff oder wie für $R^{1-5}$ oben definiert sind, mit der Maßgabe, daß die R's keine Funktionalität enthalten sollten, die basenempfindlich sind;

L' der Rest eines substituierten oder unsubstituierten aromatischen oder heteroaromatischen Kerns von 10 bis 40 Kohlenstoffatomen ist, der wenigstens eine Elektronen-anziehende Gruppe enthält, die in ortho- oder para-Stellung zu X steht, und der auch mindestens eine bifunktionelle Hauptketteneinheit $-C(G)(G')-$, wie oben definiert, enthält, und worin X eine Abgangsgruppe ist, die während der Polymerisationsreaktion des HOK'OH ersetzt wird;

W der Rest eines substituierten oder unsubstituierten aromatischen oder heteroaromatischen Kerns mit 5 bis 30 Kohlenstoffatomen ist;

mit einem Coreaktanten, der ein oder mehrere Monomere $X-Z-Y$ ist, oder von $HO-L'-X$ mit sich selbst oder von HOK'OH mit $HO-L'-X$ und ZXY, wobei Z der Rest eines substituierten oder unsubstituierten aromatischen oder heteroaromatischen Kerns von 5 bis 30 Kohlenstoffatomen ist, der mindestens eine Elektronen-anziehende Gruppe in ortho- oder para-Stellung zu X oder Y enthält, wobei X und Y Abgangsgruppen sind, die während der Polymerisationsreaktion ersetzt werden; und worin das Polyketal Molanteile von $-[O-K'-O]-$Einheiten oder $-[O-L'-O]-$Einheiten größer als oder gleich 0,1 aufweist, wobei die Reaktion in einem dipolaren aprotischen Lösungsmittel in der Gegenwart einer Base durchgeführt wird, und

(b) das Umwandeln des Polyketals in ein Polyaryletherketon in der Gegenwart von Wasser und einer Säure unter heterogenen oder homogenen Bedingungen, wobei die heterogene Hydrolyse bei Temperaturen oberhalb der Glasübergangstemperatur des Polyketals erfolgt.

2. Verfahren nach Anspruch 1, worin in $X-Z-Y$ Z

$$-Ar^3-Q-[Ar^4-Q']_n-Ar^5- \text{ oder } -\overset{Q''}{\overset{|}{Ar^6}}-$$

ist, wobei $Ar^{3-6}$ substituierte oder unsubstituierte Arylreste von 5 bis 18 Kohlenstoffatomen sind, n 0 bis 3 ist, Q und Q' Elektronen-anziehende Gruppen in ortho- oder para-Stellung zu X und Y sind und aus der Gruppe ausgewählt sind, die aus $-SO_2-$, $-CO-$, $-SO-$, $-N{=}N-$, $-C{=}N-$, $-C{=}N(O)-$, Imid, Vinylen ($-C{=}C-$) und substituiertem Vinylen, Perfluoralkyl, $-P(O)R^8-$, worin $R^8$ eine Kohlenwasserstoffgruppe ist, Ethenyl ($C{=}CH_2$), $C{=}CF_2$ oder $C{=}CCl_2$ besteht, und Q'' eine Elektronen-anziehende Gruppe in ortho- oder para-Stellung zu X und Y ist und ausgewählt ist aus der Gruppe, die aus $-NO_2$, $-CN$, Perfluoralkyl oder heteroaromatischem Stickstoff besteht, ausgewählt ist, und worin die ersetzbare Abgangsgruppen X und Y Halogen, $NO_2$, $-OSOR^8$ oder $-OSO_2R^8$ sind;

gegebenenfalls ein oder mehrere Bisphenole $HO-W-OH$, worin W aus dem Folgenden ausgewählt ist:

$$-Ar^3-Q-[Ar^4-Q']_n-Ar^5-,\ -Ar^7- \text{ und } -Ar^8-V-Ar^9$$

worin n, $Ar^{3-5}$, Q und Q' wie oben definiert sind, $Ar^{7-9}$ wie $Ar^{3-5}$ definiert sind, und worin V eine Einfachbindung, $-O-$, $-S-$, $-S-S-$ oder ein bifunktioneller Kohlenwasserstoffrest von 1 bis 20 Kohlenstoffatomen ist, der Alkyl-, Aryl- und Alkylarylreste und Ringe, die sowohl an $Ar^8$ als auch an $Ar^9$ ankondensiert sind, einschließt.

3. Verfahren nach Anspruch 1 oder Anspruch 2, worin in $HO-K'-OH$ K' ausgewählt ist aus

$$-Ar^{10}-\overset{G}{\underset{G'}{\overset{|}{\underset{|}{C}}}}-Ar^{11} \text{ und } -Ar^3-Q^3-[Ar^4-Q^4]_p-Ar^5-$$

worin G, G' und $Ar^{3-5}$ wie oben definiert sind, p eine ganze Zahl von 1 bis 5 ist, $Q^3$ und $Q^4$ wie Q, Q' und V definiert sind, mit der Maßgabe, daß wenigstens ein $Q^3$ und $Q^4$ die Gruppe —C(G)(G')— ist, und $Ar^{10}$ und $Ar^{11}$ substituiertes oder unsubstituiertes Aryl von 5 bis 18 Kohlenstoffatomen und —$Ar^8$—V—$Ar^9$—, das wie in Anspruch 2 definiert ist, sind.

4. Verfahren nach Anspruch 2 oder Anspruch 3, worin W aus dem Folgenden oder Anspruch 33, worin W aus dem Folgenden ausgewählt ist:

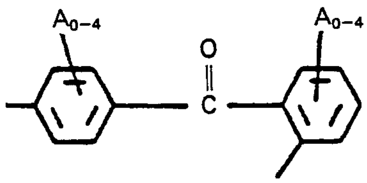
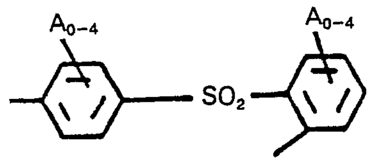
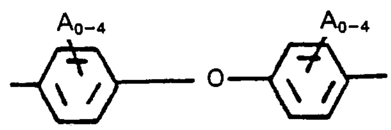
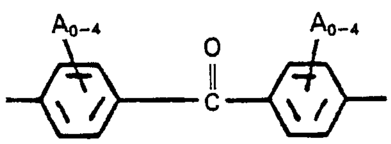
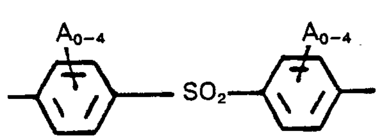
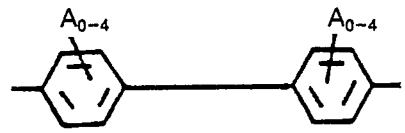
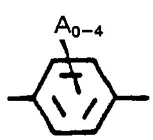
,
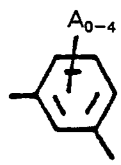
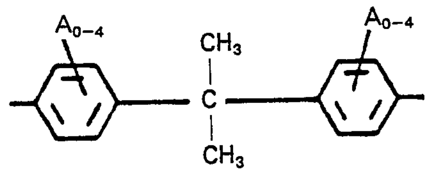
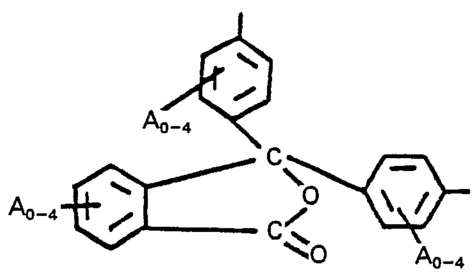
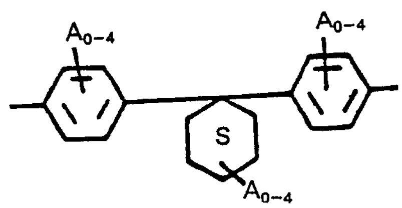
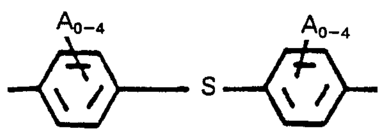

und Isomeren davon, und worin A eine Substituentengruppe ohne störenden Einfluß und unter den Polymerisationsbedingungen unreaktiv ist und unabhängig ausgewählt ist aus der Gruppe gewöhnlicher organischer Substituenten, die Wasserstoff, Alkyl, Aryl, Halogen, Cyano einschließt, und worin X und Y Halogen oder Nitro sind.

5. Verfahren nach irgendeinem der vorangehenden Ansprüche, worin HO—L'—X aus dem Folgenden ausgewählt ist:

$$HO{-}Ar^{10}{-}\overset{G\quad Q''}{\underset{G'}{C}{-}Ar^6}{-}X,\quad HO{-}Ar^3{-}\overset{G}{\underset{G'}{C}}{-}Ar^4{-}Q^4_n{-}Ar^5{-}X \text{ und } HO{-}Ar^3{-}Q^3{-}Ar^4_n{-}Q^4{-}Ar^5{-}X$$

worin $Ar^{3-6}$, $Ar^{10}$, Q'', G und G' wie oben definiert sind; $A^4$ wie oben definiert ist, mit der Maßgabe, daß wenigstens ein $Q^4$ wie Q und Q' definiert und in ortho- oder para-Stellung zu X ist, $Q^3$ wie oben definiert ist, mit der Maßgabe, daß wenigstens ein $Q^3$ —C(G)(G')— ist, und n 1 bis 5 ist, und worin X Halogen oder Nitro ist.

6. Verfahren nach irgendeinem der vorangehenden Ansprüche, worin in X—Z—Y Z aus dem Folgenden ausgewählt ist:

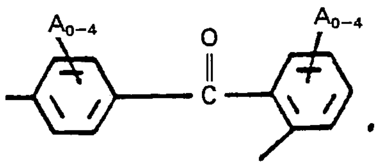,
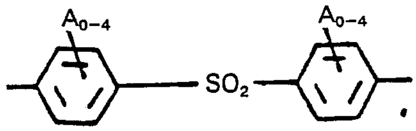,
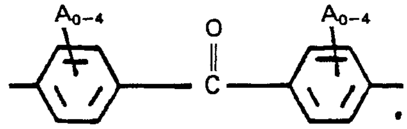,

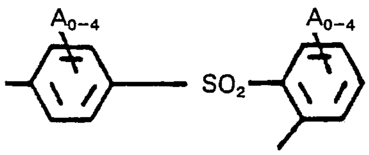
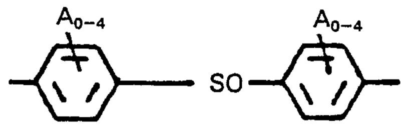

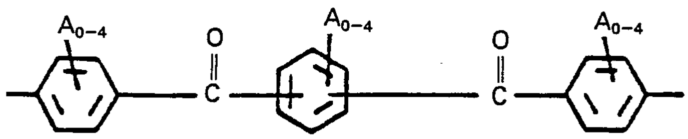,

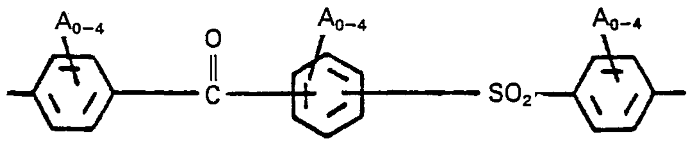,

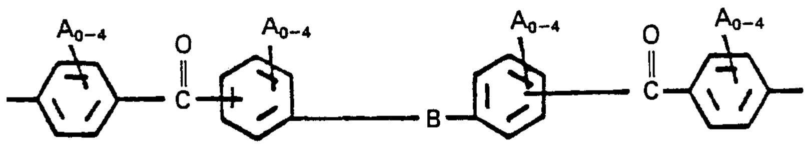,

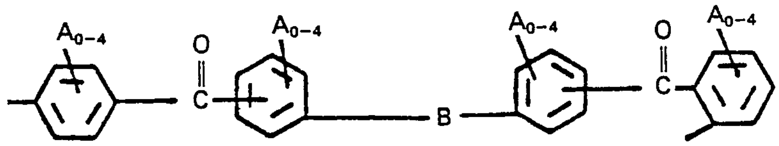,

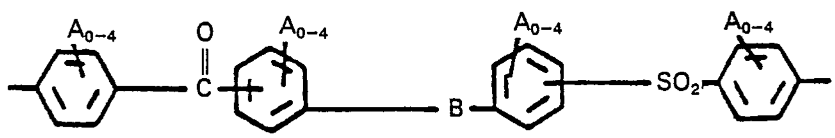,

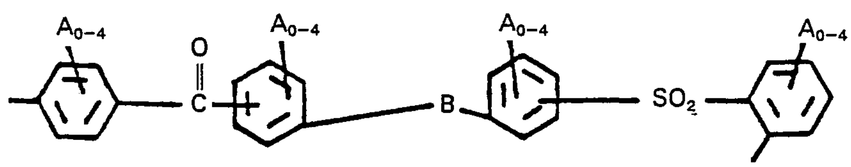,

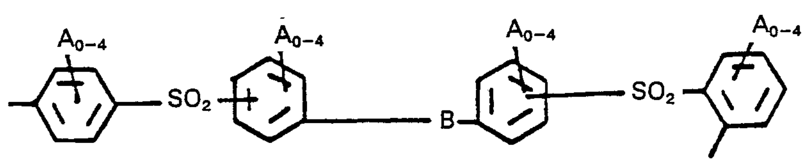,

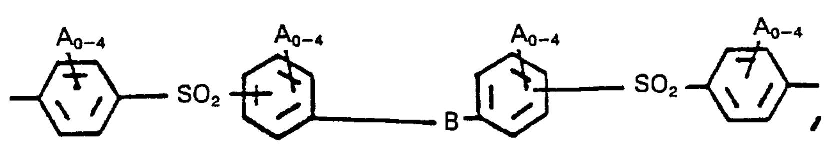,

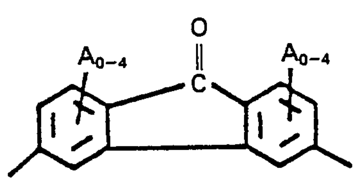
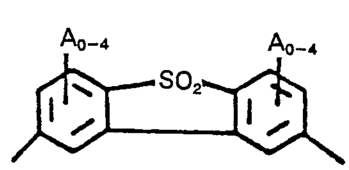

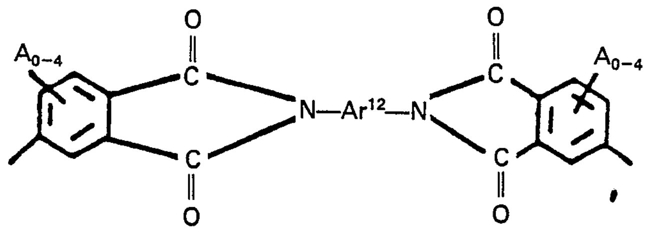

,

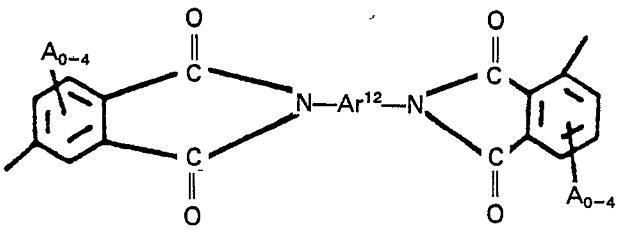

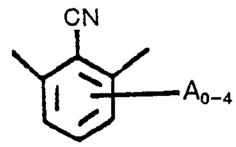

und isomeren davon, und worin B definiert ist wie oben V, Q und Q', $Ar^{12}$ definiert ist wie oben $Ar^{1-11}$ und A eine Substituentengruppe ohne störenden Einfluß und unter den Polymerisationsbedingungen unreaktiv ist und unabhängig ausgewählt ist aus der Gruppe gewöhnlicher organischer Substituenten, die Wasserstoff, Alkyl, Aryl, Halogen, Cyano einschließt, und worin X und Y Halogen oder Nitro sind.

7. Verfahren nach irgendeinem der vorangehenden Ansprüche, worin HO—L'—X ausgewählt ist aus dem Folgenden:

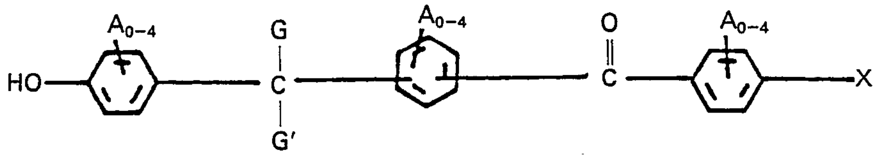

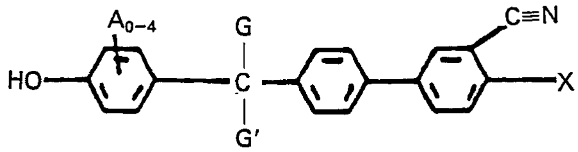

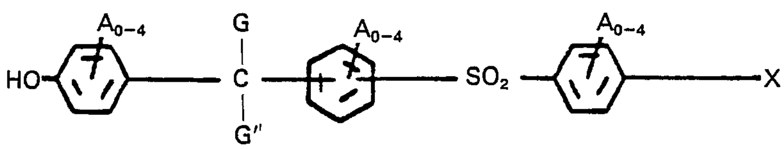

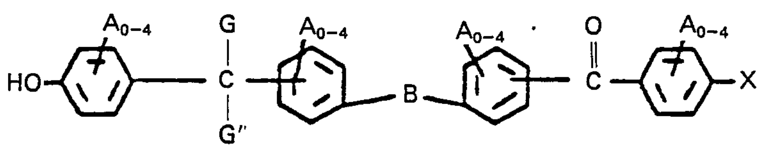

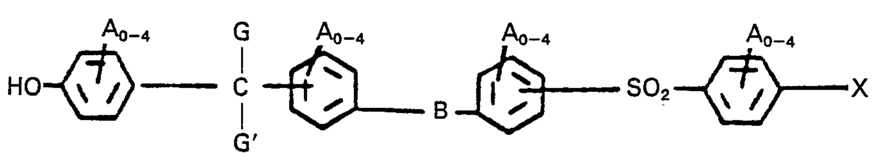

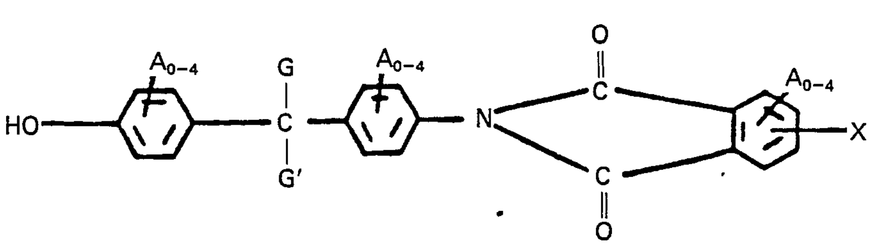

und Isomeren davon, und worin A und B wie oben definiert sind, und X F, Cl oder $NO_2$ ist; G und G' —OR, —SR oder —$NR_2$ ist, worin R substituiertes oder unsubstituiertes Alkyl, Aryl, Arylalkyl von 1 bis 20 Kohlenstoffatomen ist und Heteroatome enthalten kann oder andere nicht-störende funktionelle Gruppen, mit der Maßgabe, daß R keine Funktionalität enthält, die basenempfindlich ist, und G und G' gleich oder verschieden und gebunden oder ungebunden sein können.

8. Verfahren nach irgendeinem der vorhergehenden Ansprüche, worin in HO—K'—OH K' ausgewählt ist aus

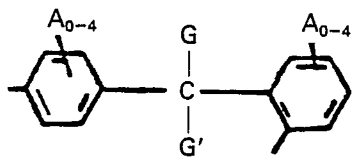

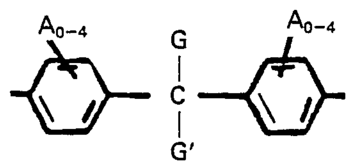

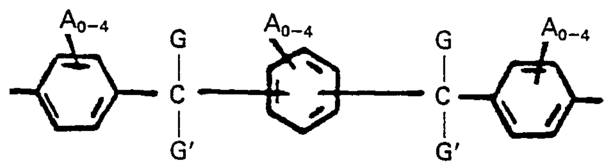

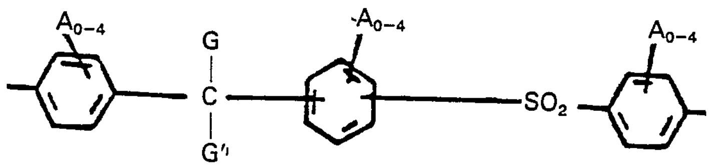

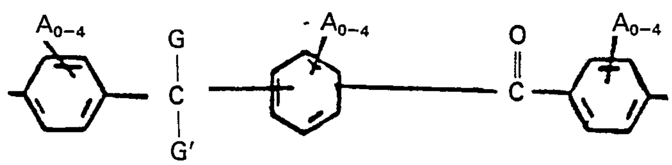

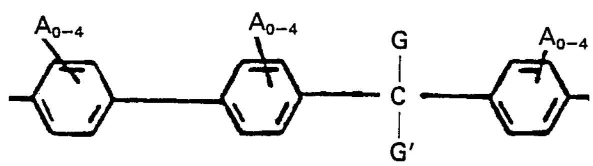

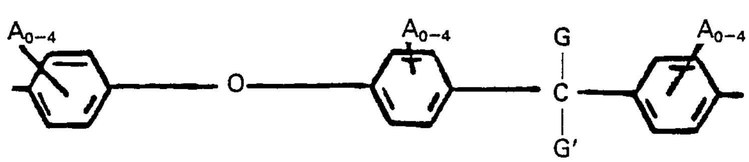

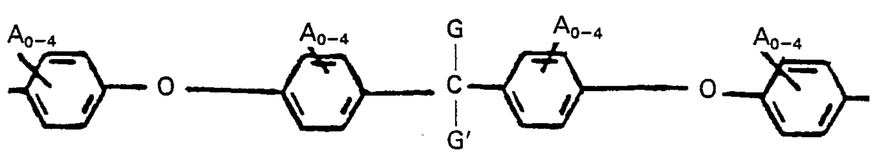

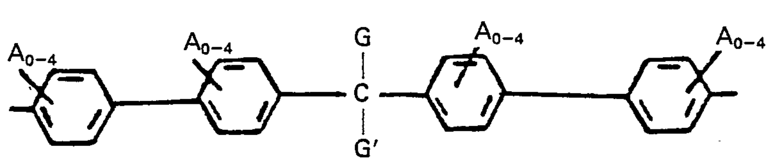

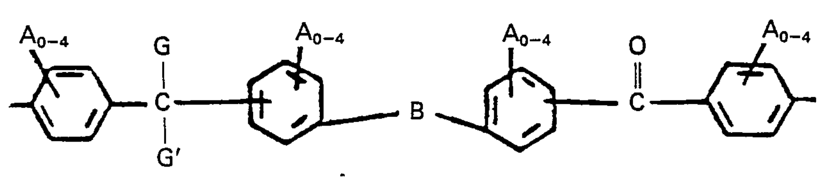

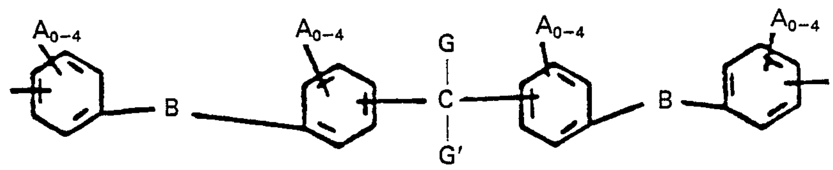

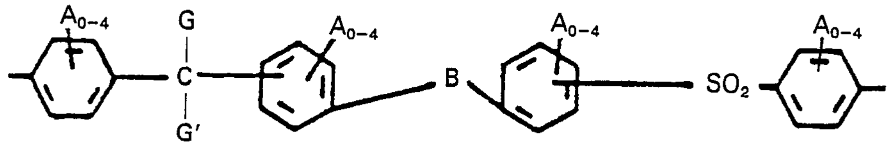

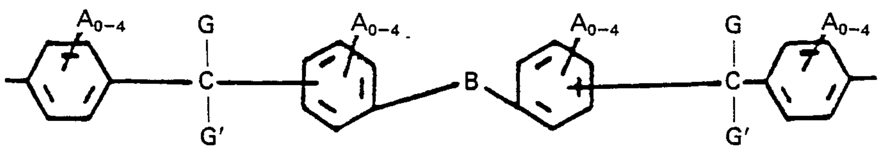

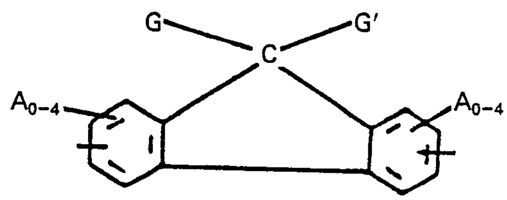

und Isomeren davon, und worin A und B wie oben definiert sind.

9. Verfahren nach irgendeinem der vorangehenden Ansprüche 6 bis 8, worin Z

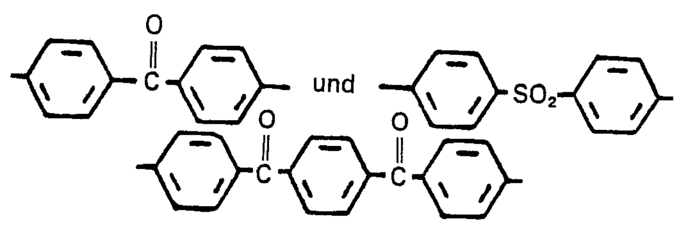

ist, worin X und Y F oder Cl und A Wasserstoff sind.

10. Verfahren nach Anspruch 8 oder Anspruch 9, worin K' ausgewählt ist aus

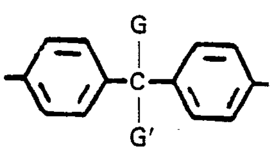

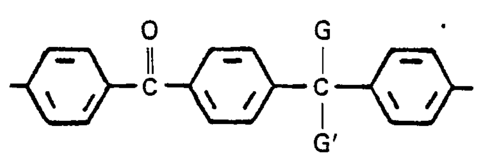

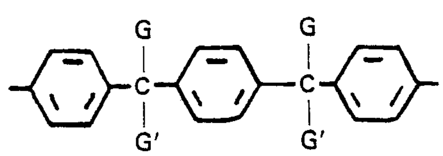

worin A Wasserstoff ist und G und G' —OR, —SR oder —$NR_2$ sind, worin R substituiertes oder unsubstituiertes Alkyl, Aryl oder Aryl-Alkyl von 1 bis etwa 20 Kohlenstoffatomen ist und Heteroatome oder funktionelle Gruppen ohne störenden Einfluß enthalten kann, mit der Maßgabe, daß R keine Funktionalität enthalten sollte, die basenempfindlich ist, und G und G' gleich oder verschieden und verbunden oder unverbunden sein können; und G und G' am meisten bevorzugt —OR sind.

11. Verfahren nach Anspruch 1, worin die Säure von Stufe (b) ausgewählt ist aus Chlorwasserstoffsäure, Salpetersäure, Fluorsulfonsäure oder Schwefelsäure.

12. Verfahren nach Anspruch 1, worin die Säure von Stufe (b) eine organische Säure, ausgewählt aus p-Toluolsulfonsäure oder Trifluormethansulfonsäure, ist.

13. Verfahren nach irgendeinem der vorangehenden Ansprüche, worin in der heterogenen Stufe (b) das Gewichtsverhältnis von Wasser zu Polyketal 1 bis 100 beträgt.

14. Verfahren nach Anspruch 13, worin die Säure mit einer Konzentration von 0,0001 bis 20 Gewichtsprozent des anwesenden Wassers verwendet wird.

15. Verfahren nach Anspruch 14, worin die Säure mit einer Konzentration von 0,005 bis 2 Gewichtsprozent verwendet wird.

16. Verfahren nach irgendeinem der vorangehenden Ansprüche, worin die homogene Umwandlung von Polyketal in Polyaryletherketon durchgeführt wird, indem man das Polyketal mit konzentrierter wässriger Säure, in welcher das Polyaryletherketon-Produkt löslich ist, behandelt.

17. Verfahren nach Anspruch 16, worin ein Teil Polyketal entweder partiell oder vollständig in einem bis 200 Teilen konzentrierter Säure gelöst wird, die eine Menge an Wasser enthält, die zumindest stöchiometrisch in Bezug auf die Ketalfunktionalität des Polyketals ist.

18. Verfahren nach Anspruch 17, worin das Polyketal in 5 bis 20 Teilen der Säure gelöst ist.

19. Verfahren nach Anspruch 17 oder Anspruch 18, worin die Reaktion bei einer Temperatur von −20°C bis 200°C durchgeführt wird.

20. Verfahren nach Anspruch 10, worin die Temperatur 10°C bis 70°C beträgt.

21. Verfahren nach irgendeinem der Ansprüche 17 bis 20, worin die konzentrierte Säure Schwefelsäure, die 1 bis 40 Gewichtsprozent Wasser enthält, ist.

22. Verfahren nach Anspruch 21, worin die Schwefelsäure 2 bis 20 Gewichtsprozent Wasser enthält.

23. Verfahren nach Anspruch 1, worin K'

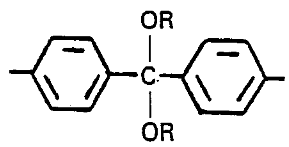

ist, worin R substituiertes oder unsubstituiertes Alkyl, Aryl oder Arylalkyl von 1 bis 20 Kohlenstoffatomen ist und Heteroatome oder funktionelle Gruppen ohne störenden Einfluß enthalten kann, mit der Maßgabe, daß R keine Funktionalität enthalten sollte, die basensempfindlich ist, und die Gruppen R gleich oder verschieden und verbunden oder unverbunden sein können, und X—Z—Y ausgewählt ist aus

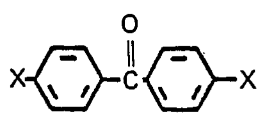 und 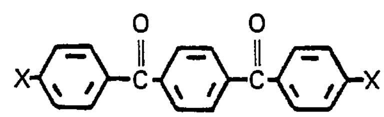

worin X F, Cl oder $NO_2$ ist.

**Revendications**

1. Procédé de préparation d'une polyaryléthercétone, qui consiste:

(a) à préparer un polycétal par réaction d'un ou plusieurs composés de formule: HO—K'—OH ou HO—L'—X et à titre facultatif, un ou plusieurs bisphénols HO—W—OH, formules dans lesquelles K' est le résidu d'un noyau aromatique ou hétéroaromatique substitué ou non substitué contenant 10 à 40 atomes de carbone et contenant également au moins un motif difonctionnel dont son squelette de formule suivante:

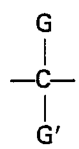

ledit motif étant stable aux conditions basiques de polymérisation utilisées, G et G' sont choisis dans le groupe comprenant un radical halogénure, —OR, —$OCOR^1$, —$NR^2R^3$, —$NHCOR^4$, —$SR^5$ où R et $R^1$ à $R^5$ représentent chacun, indépendamment, un radical alkyle, aryle ou arylalkyle de 1 à 20 atomes de carbone; R et $R^1$ à $R^5$ peuvent être substitués ou non substitués, peuvent contenir des hétéroatomes et peuvent aussi être attachés par une liaison chimique reliant ainsi G et G', et G et G' sont choisis, en combinaison, dans le groupe des radicaux =N—N—Ar, =NOH, =N—Ar et =N—$NHCONR^6R^7$, où Ar et Ar' sont des groupes aryle substitués ou non substitués ayant 5 à 12 atomes de carbone et $R^6$ et $R^7$ représentent de l'hydrogène ou ont les définitions données ci-dessus pour $R^1$ à $R^5$, sous réserve que les groupes R ne contiennent pas de fonctionnalité sensible aux bases;

L' est le résidu d'un noyau aromatique ou hétéroaromatique substitué ou non substitué de 10 à 40 atomes de carbone contenant au moins un groupe attirant les électrons en position ortho ou para par rapport à X et contenant également au moins un motif difonctionnel —C(G)(G')— dans le squelette, comme défini ci-dessus, et X est un groupe partant déplacé pendant la réaction de polymérisation de HOK'OH;

W est le résidu d'un noyau aromatique ou hétéroaromatique substitué ou non substitué de 5 à 30 atomes de carbone;

avec un corps co-réactionnel qui consiste en un ou plusieurs monoméres X—Z—Y ou HO—L'—X avec lui-même ou HOK'OH avec HO—L'—X et ZXY, où Z est le résidu d'un noyau aromatique ou hétéroaromatique substitué ou non substitué de 5 à 30 atomes de carbone contenant au moins un groupe attirant les électrons en ortho ou para par rapport à X et Y, ces derniers étant des groupes partants,

qui sont déplacés pendant la réaction de polymérisation; et le polycétal a une fraction molaire de motifs $-[O-K'-O]-$ ou de motifs $-[O-L'-O]-$ supérieure ou égale à 0,1, ladite réaction étant conduite dans un solvant aprotique dipolaire en présence d'une base, et

(b) à convertir le polycétal en une polyaryléthercétone en présence d'eau et d'un acide dans des conditions hétérogènes ou homogènes selon lesquelles l'hydrolyse hétérogène à une température au-dessus de la température de transition vitreuse du polycétal.

2. Procédé suivant la revendication 1, dans lequel, dans la formule: X—Z—Y, Z est un groupe

$$-Ar^3-Q-[Ar^4-Q']_n-Ar^5- \quad \text{ou} \quad -\overset{\overset{Q''}{|}}{Ar^6}-$$

où $Ar^{3-6}$ sont des radicaux aryle substitués ou non substitués de 5 à 18 atomes de carbone, n a une valeur de 0 à 3, Q et Q' sont des groupes attirant les électrons en ortho ou en para par rapport à X et Y et sont choisis entre $-SO_2-$, —CO—, —SO—, —N=N—, —C=N—, —C=N(O)—, un groupe imide, un groupe vinylène (—C=C—) et un groupe vinylène substitué, un groupe perfluoralkyle, un groupe $-P(O)R^8-$, dans lequel $R^8$ est un groupe hydrocarboné, un groupe éthényle, $(C=CH_2)$, $C=CF_2$ ou $C=CCl_2$ et Q'' est un groupe attirant les électrons en ortho ou en para par rapport à X et Y et choisi dans le groupe des radicaux $-NO_2$, —CN, perfluoralkyle ou de l'azote hétéroaromatique, et les groupes partants X et Y déplaçables représentent un halogène, un groupe $NO_2$, $-OSOR^8$ ou $-OSO_2R^8$;

facultativement un ou plusieurs bisphénols HO—W—OH où W est choisi entre des groupes de formules suivantes:

$$-Ar^3-Q-[Ar^4-Q']_n-Ar^5-, \quad -Ar^7- \quad \text{et} \quad -Ar^8-V-Ar^9-$$

dans lesquelles n, $Ar^{3-5}$, Q et Q' sont tels que définis ci-dessus, $Ar^{7-9}$ ont les définitions données pour $Ar^{3-6}$ et V est une liaison simple, —O—, —S— ou —S—S— ou un radical hydrocarboné difonctionnel de 1 à 20 atomes de carbone, comprenant des radicaux alkyle, aryle et alkylaryle et des noyaux condensés à $Ar^8$ et à $Ar^9$.

3. Procédé suivant la revendication 1 ou la revendication 2, dans lequel, dans la formule: HO—K'—OH K' est choisi entre des groupes de formules

$$-Ar^{10}-\underset{\underset{G'}{|}}{\overset{\overset{G}{|}}{C}}-Ar^{11} \quad \text{et} \quad -Ar^3-Q^3-[Ar^4-Q^4]_p-Ar^5-$$

dans lesquelles G, G' et $Ar^{3-5}$ sont tels que définis ci-dessus, p est un nombre entier de 1 à 5, $Q^3$ et $Q^4$ ont les définitions données pour Q, Q' et V, sous réserve que l'un au moins de $Q^3$ et $Q^4$ représente le groupe —C(G)(G')— et $Ar^{10}$ et $Ar^{11}$ sont des groupes aryle substitués ou non substitués de 5 à 18 atomes de carbone, et $-Ar^8-V-Ar^9-$ tel que défini dans la revendication 2.

4. Procédé suivant la revendication 2 ou la revendication 3, dans lequel W est choisi entre les groupes suivants:

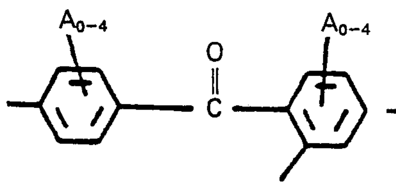 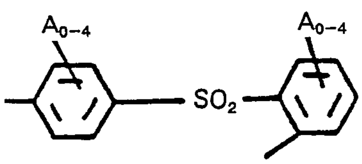 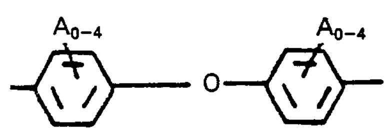

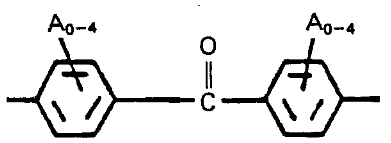 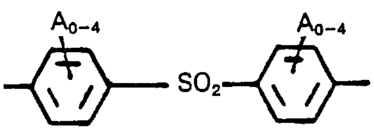 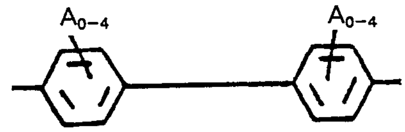

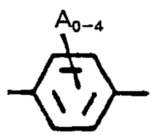 , 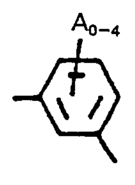 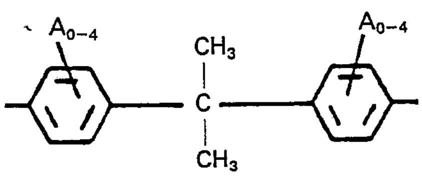

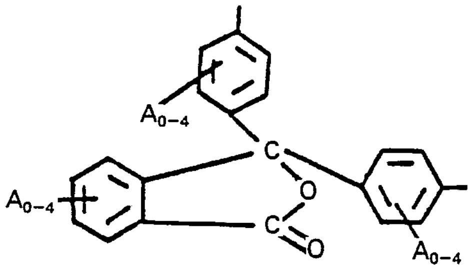 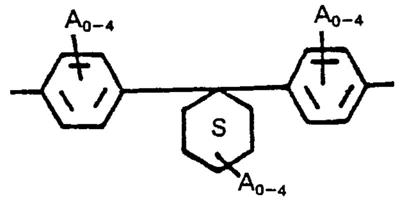

et leurs isomères, et A est un groupe substituant non interférant, non réactif dans les conditions de polymérisation et choisi indépendamment dans le groupe des substituants organiques usuels comprenant l'hydrogène et des substituants alkyle, aryle, halogèno, cyano, et X et Y représentent un halogène ou un groupe nitro.

5. Procédé suivant l'une quelconque des revendications précédentes, dans lequel HO—L'—X est choisi entre les groupes suivants:

$$HO-Ar^{10}-\underset{G'}{\overset{G}{C}}-\overset{Q''}{Ar^{6}}-X,\quad HO-Ar^{3}-\underset{G'}{\overset{G}{C}}\!\left[Ar^{4}-Q^{4}\right]_{n}\!-Ar^{5}-X \text{ et } HO-Ar^{3}\!\left[Q^{3}-Ar^{4}\right]_{n}\!-Q^{4}-Ar^{5}-X$$

où $Ar^{3-6}$, $Ar^{10}$, Q'', G et G' sont tels que définis ci-dessus, $Q^4$ est tel que défini ci-dessus sous réserve qu'au moins un $Q^4$ ait la définition donnée pour Q et Q' et soit en ortho ou para par rapport à X, $Q^3$ est tel que défini ci-dessus sous réserve qu'au moins un $Q^3$ soit un groupe —C(G)(G') et n a une valeur de 1 à 5, et X est un halogène ou un groupe nitro.

6. Procédé suivant l'une quelconque des revendications précédentes, dans lequel, dans la formule X—Z—Y, Z est choisi entre les groupes suivants:

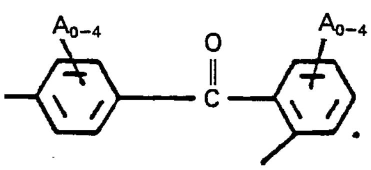 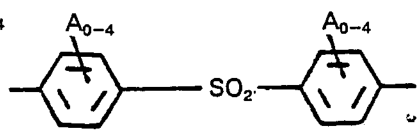 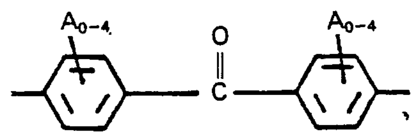,

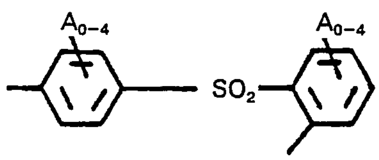 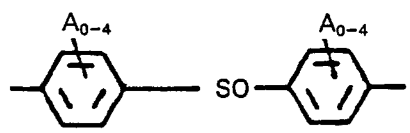

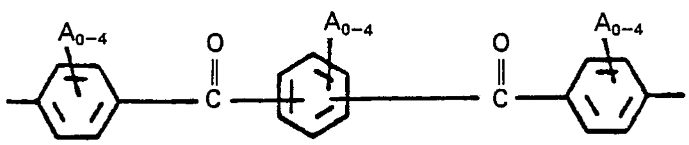,

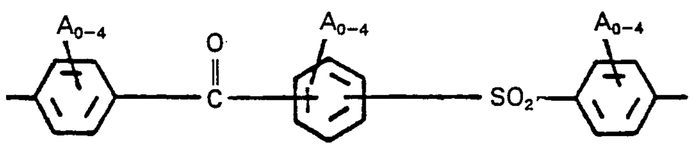,

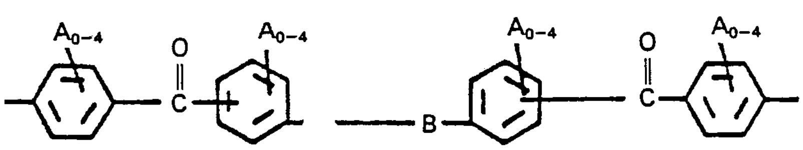,

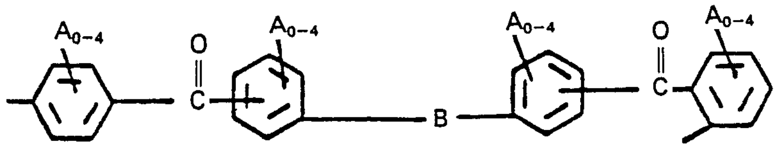
,

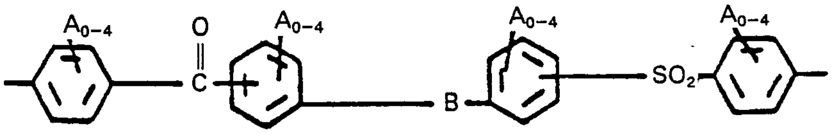
,

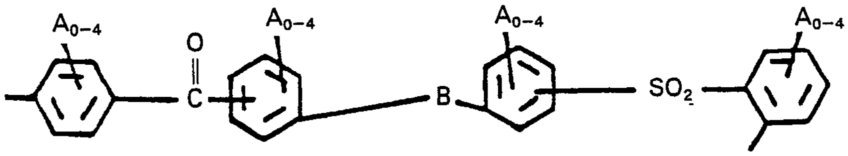
,

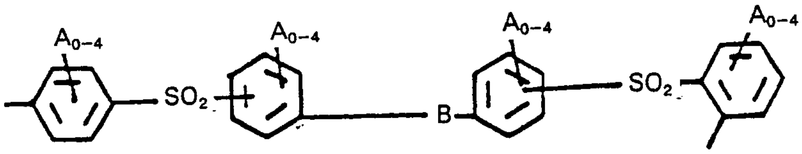
,

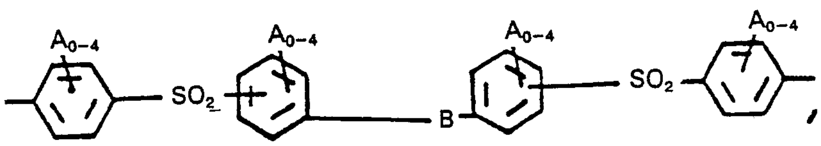
,

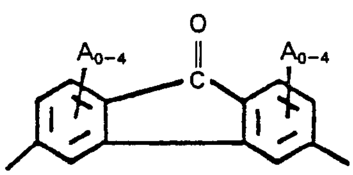

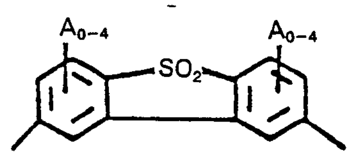

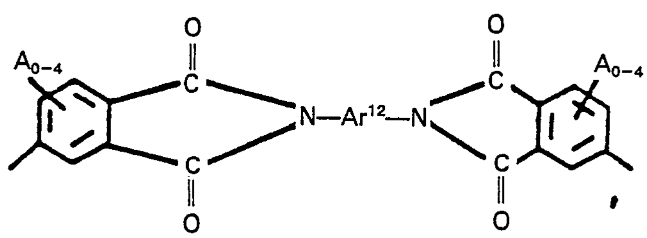
,

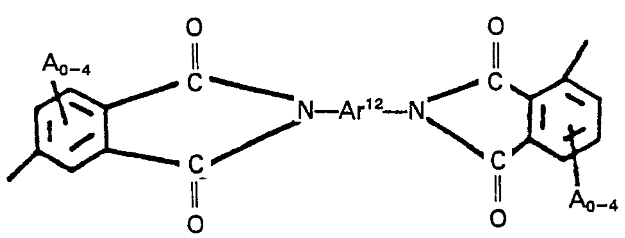

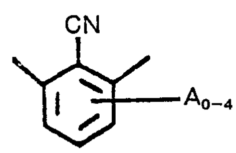

et leurs isomères, et B est tel que défini ci-dessus pour V, Q et Q', $AR^{12}$ est tel que défini ci-dessus pour $Ar^{1-11}$ et A est un groupe substituant non interférant non réactif dans les conditions de polymérisation et choisi indépendamment dans le groupe des substituants organiques courants comprenant l'hydrogène et les substituants alkyle, aryle, halogèno, cyano, et X et Y représentent un halogène ou un groupe nitro.

7. Procédé suivant l'une quelconque des revendications précédentes, dans lequel HO—L'—X est choisi entre les groupes suivants:

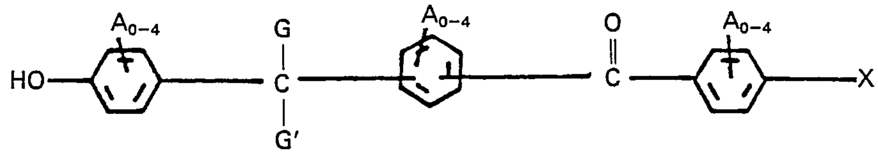

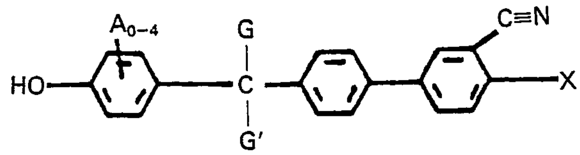

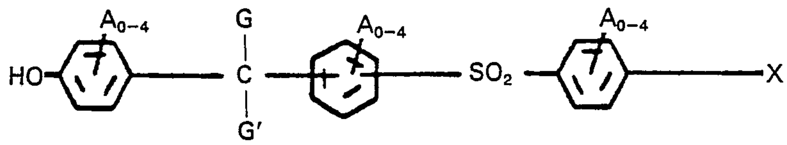

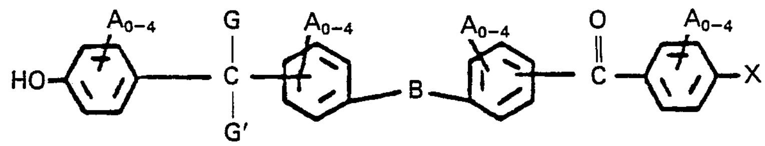

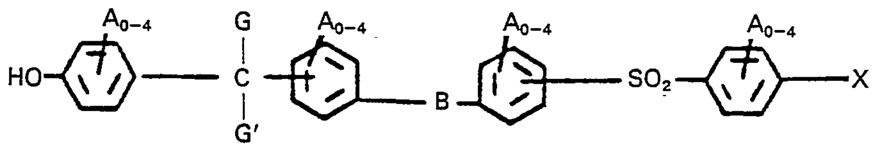

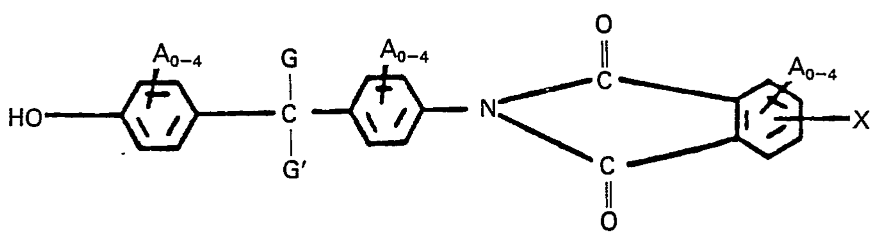

et leurs isomères, et A et B sont tels que définis ci-dessus, et X représente F, Cl ou $NO_2$; G et G′ sont des groupes —OR, —SR ou —$NR_2$ dans lesquels R est un radical alkyle, aryle, arylalkyle substitué ou non substitué de 1 à 20 atomes de carbone et peuvent contenir des hétéroatomes ou d'autres groupes fonctionnels non interférants sous réserve que R ne contienne pas de fonctionnalité qui soit sensible aux bases, et G et G′ peuvent être identiques ou différents et reliés ou non reliés.

8. Procédé suivant l'une quelconque des revendications précédentes, dans lequel, dans HO—K′—OH, K′ est choisi entre

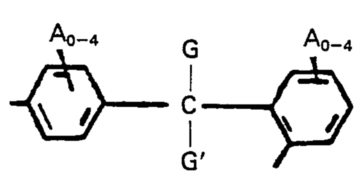

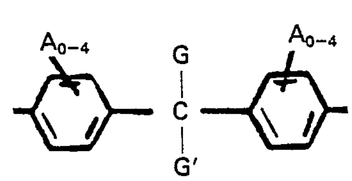

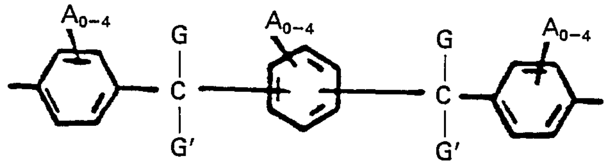

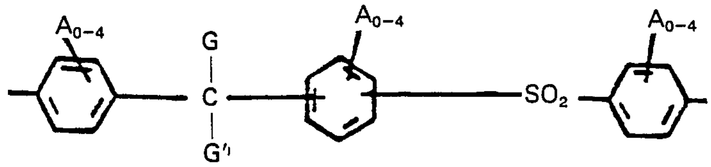

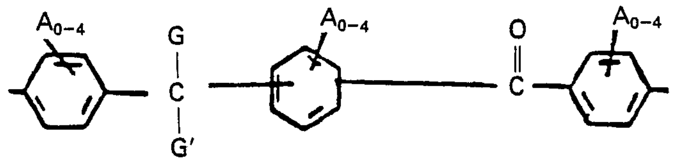

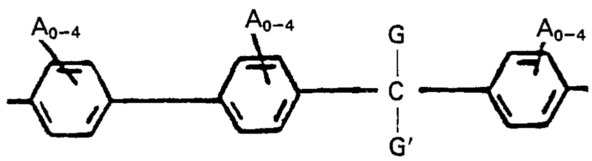

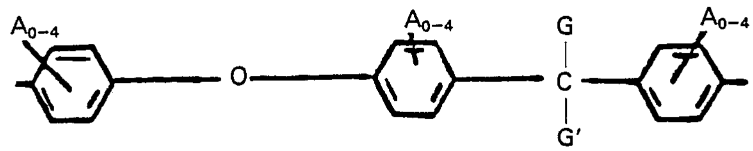

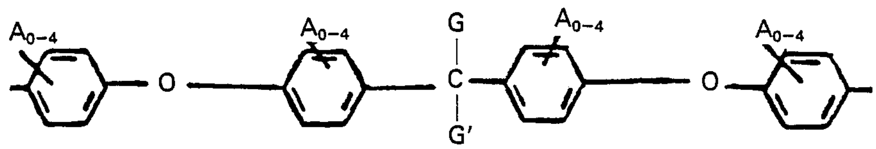

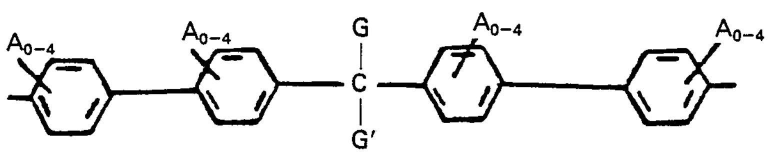

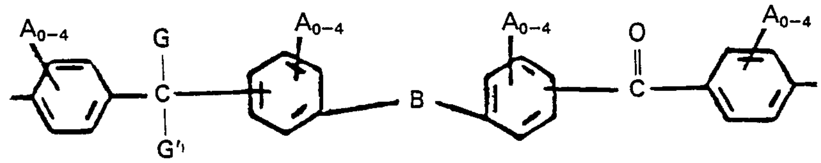

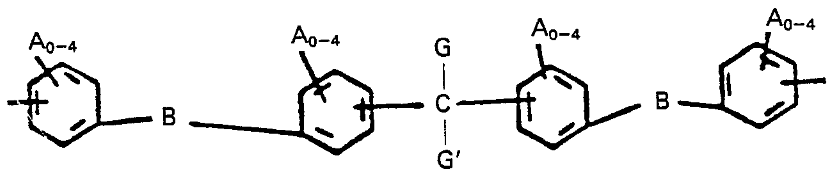

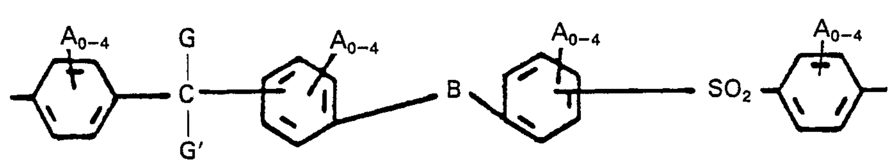

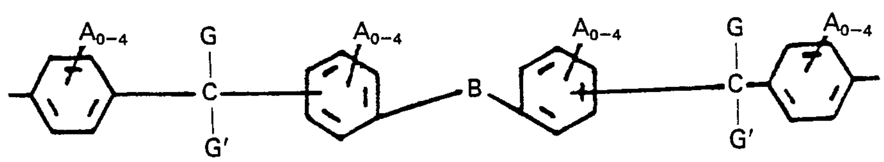

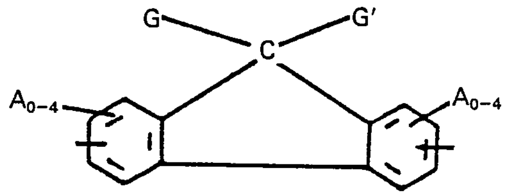

et leurs isomères et A et B sont tels que définis ci-dessus.

9. Procédé suivant l'une quelconque des revendications 6 à 8, dans lequel Z répond à l'une des formules

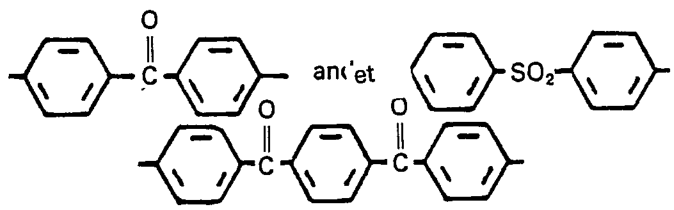

où X et Y représentent F ou Cl et A est l'hydrogène.

10. Procédé suivant la revendication 8 ou la revendication 9, dans lequel K' est choisi entre

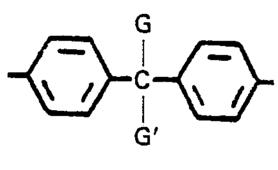

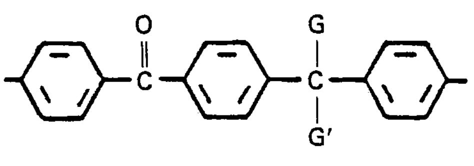

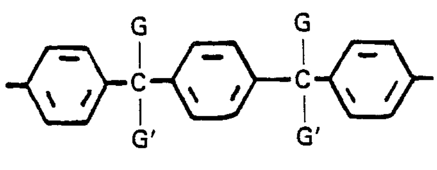

où A est l'hydrogène et G et G' représentent —OR, —SR ou —$NR_2$, où R est un groupe alkyle, aryle ou arylalkyle substitué ou non substitué ayant 1 à environ 20 atomes de carbone et peut contenir des hétéroatomes ou d'autres groupes fonctionnels non interférants, sous réserve que R ne contienne pas de fonctionnalité qui sout sensible aux bases, et G et G' peuvent être identiques ou différents et reliés ou non reliés; et G et G' représentent le plus avantageusement des groupes —OR.

11. Procédé suivant la revendication 1, dans lequel l'acide utilisé dans l'étape (b) est choisi entre l'acide chlorhydrique, l'acide nitrique, l'acide fluorosulfonique ou l'acide sulfurique.

12. Procédé suivant la revendication 1, dans lequel l'acide de l'étape (b) est un acide organique choisi entre l'acide p-toluènesulfonique et l'acide trifluorométhanesulfonique.

13. Procédé suivant l'une quelconque des revendications précédentes, dans lequel le rapport en poids de l'eau au polycétal dans l'étape hétérogène (b) a une valeur de 1 à 100.

14. Procédé suivant la revendication 13, dans lequel l'acide est utilisé à une concentration de 0,0001 à 20% en poids de l'eau présente.

15. Procédé suivant la revendication 14, dans lequel l'acide est utilisé à une concentration de 0,005 à 2% en poids.

16. Procédé suivant l'une quelconque des revendications précédentes, dans lequel la transformation homogène de polycétal en polyaryléthercétone est conduite par traitement du polycétal avec un acide aqueux concentré dans lequel le produit polyaryléthercétonique est soluble.

17. Procédé suivant la revendication 16, dans lequel une partie de polycétal est dissoute, partiellement ou complètement, dans 1 à 200 parties d'acide concentré contenant au moins une quantité stoechiométrique d'eau sur la base de la fonctionnalité cétal du polycétal.

18. Procédé suivant la revendication 17, dans lequel le polycétal est dissous dans 5 à 20 parties de l'acide.

19. Procédé suivant la revendication 17 ou la revendication 18, dans lequel la réaction est conduite à une température de −20°C à 200°C.

20. Procédé suivant la revendication 19, dans lequel la température va de 10 à 70°C.

21. Procédé suivant l'une quelconque des revendications 17 à 20, dans lequel l'acide concentré est de l'acide sulfurique qui contient 1 à 40% en poids d'eau.

22. Procédé suivant la revendication 21, dans lequel l'acide sulfurique contient 2 à 20% en poids d'eau.

23. Procédé suivant la revendication 1, dans lequel K' est un groupe de formule

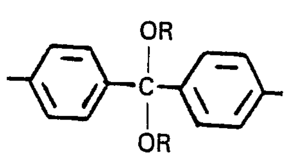

où R est un radical alkyle, aryle ou aryl-alkyle substitué ou non substitué de 1 à 20 atomes de carbone et peut contenir des hétéroatomes ou d'autres groupes fonctionnels non interférants, sous réserve que R ne contienne pas de fonctionnalité qui soit sensible aux bases et les groupes R peuvent être identiques ou différents et reliés ou non reliés et X—Z—Y est choisi entre des groupes de formules

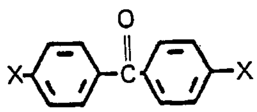 et 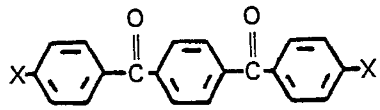

dans lesquelles X représente F, Cl ou $NO_2$.